# EUROPÄISCHE PATENTSCHRIFT

(11) **EP 2 900 447 B1**
(45) Veröffentlichungstag und Bekanntmachung des Hinweises auf die Patenterteilung: **23.05.2018**
(21) Anmeldenummer: 13811378.2
(22) Anmeldetag: 04.12.2013
(51) Int. Cl.: B29C 45/00, B29B 13/02, B29D 23/00, B29C 43/02, B29C 57/04, B29C 59/02, G01F 1/66, G01F 15/00, G01F 15/14

(54) **HEISSSTEMPELVERFAHREN**
HOT MANDREL PRESSING METHOD
PROCEDE D'ESTAMPILLAGE A CHAUD

(30) Priorität: 04.12.2012 DE 202012012729 U; 10.09.2013 DE 102013015069
(43) Veröffentlichungstag der Anmeldung: 05.08.2015
(73) Patentinhaber: Sartorius Stedim Biotech GmbH, 37079 Göttingen (DE)
(72) Erfinder: REGEN, Thomas, 37079 Göttingen (DE); PURMANN, Sebastian, 37073 Göttingen (DE); PASCHALIS, Nikoloudis, 37079 Göttingen (DE); GRIMM, Christian, 37308 Heilbad Heiligenstadt (DE)
(74) Vertreter: Müller-Boré & Partner Patentanwälte PartG mbB
(86) Internationale Anmeldenummer: PCT/EP2013/003661
(87) Internationale Veröffentlichungsnummer: WO 2014/086485

(56) Entgegenhaltungen:
- EP-A1- 2 343 101
- WO-A1-2008/128154
- GB-A- 1 008 445
- JP-A- 2008 196 924
- US-A- 3 270 117
- US-A- 3 983 203
- US-A- 4 525 136
- Anonymous: "Loch im Sauger vergrößern? | Kinderarzt Dr. Andreas Busse", , 24 January 2003 (2003-01-24), XP055393903, Retrieved from the Internet: URL:http://www.rund-ums-baby.de/kinderarzt /Loch-im-Sauger-vergroessern_99326.htm [retrieved on 2017-07-26]

## Beschreibung

Die vorliegende Erfindung betrifft ein Verfahren zum Ausbilden eines Kanals sowie ein Produkt umfassend zumindest einen Kanal.

Zur Erzeugung von Kanälen in Bauteilen können verschiedene Herstellungsverfahren verwendet werden.

Bei der mechanischen Bearbeitung werden zylindrische Durchgangsbohrungen durch Bohren oder Fräsen erzeugt. Das Fräsen eignet sich dabei insbesondere für die Fertigung von Innenkanälen mit variablem Querschnitt, z.B. für Übergänge im Querschnitt von quadratisch auf rund. Hierbei sind auch Hinterschnitte realisierbar. Nachteile hierbei sind die relativ aufwendige CNC-Programmierung sowie die nur unzureichend erzielbare Oberflächengüte, da es beim Fräsen zu Bearbeitungsriefen kommt. Dadurch werden im Anschluss an das Fräsen weitere Bearbeitungsschritte notwendig, durch die die Oberflächen geglättet werden können. Diese Verfahrensschritte, z.B. Honen, Schleifen und Polieren sind jedoch oftmals mit hohem Aufwand und Kosten verbunden. Ein weiteres mechanisches Herstellungsverfahren ist das Bohren. Innenkanäle lassen sich jedoch nur als zylindrische Querschnitte durch z.B. Stufenbohrungen realisieren.

Alternativ können die gewünschten Bauteile im Spritzgussverfahren gefertigt werden. Dabei lassen sich variable Querschnitte durch spezielle Werkzeugtechniken herstellen und Hinterschnitte durch die Verwendung von federnden Auswerfern bzw. Einfallkernen realisieren. Durchgangsbohrungen mit variablem Querschnitt ohne Hinterschnitte können durch entsprechende Kerne im Werkzeug erzeugt werden. Hierbei muss durch das Schrumpfverhalten der Schmelze beim Abkühlen in der Form ausreichend Entformungsschräge vorgesehen werden. Bei zu langen Kernen im Spritzgusswerkzeugen kann es bei ungünstig ausgelegter Anspritzung zu Kernversatz während des Einspritzvorganges kommen. Dies führt zu unterschiedlichen Wandstärken im Bauteil. Zur Minimierung des Kernversatzes werden Werkzeugkerne häufig mittig auf die Auswerferseite bzw. Düsenseite getrennt. Hierbei entsteht allerdings ein Formtrenngrad an der Stelle des Zusammentreffens der beiden Kernhälften. Nachteilig bei dem Spritzgussverfahren sind ferner die hohen Kosten der Werkzeuge.

EP 2 343 101 A1 offenbart einen Stanzer zum Herstellen eines Mikronadel-Plättchens. Der Stanzer weist ein plattenförmiges Basismaterial mit konischen Ausnehmungen auf, welche sich von einer Oberfläche des Basismaterial zur anderen Oberfläche erstrecken. Der Stanzer wird hergestellt, indem eine Postitivplatte mit konischen Vorsprüngen gegen das Basismaterial des Stanzers gepresst wird, wobei die konischen Vorsprünge auf eine Temperatur über der Schmelztemperatur des Basismaterials vorgeheizt werden können, um eine plastische Umformung zu vereinfachen.

WO 2008/128154 A1 offenbart ein Verfahren zum Verschweißen eines ersten Rohrabschnitts mit einem zweiten Rohrabschnitt, wobei beide Rohrabschnitte an ihren Enden jeweils einen aufgeweiteten Abschnitt aufweisen. Die aufgeweiteten Abschnitte werden durch Einführen eines Dorns in die Endabschnitte der Rohrabschnitte ausgebildet, wobei der Dorn auf eine Temperatur erhitzt ist, die ein zumindest teilweises Aufschmelzen der Endabschnitte der Rohrabschnitte ermöglicht.

US 3 270 117 offenbart ein Verfahren zum Umformen eines Gummirohres. Gemäß dem Verfahren wird zunächst ein unvulkanisiertes, rohrförmiges Ausgangsmaterial auf einen ersten zylindrischen Abschnitt eines männlichen Formwerkzeugs gesteckt, wobei das männliche Formwerkzeug einen zweiten zylindrischen Abschnitt mit vergrößertem Durchmesser aufweist, welcher sich stufenlos an den ersten zylindrischen Abschnitt anschließt. Das männliche Formwerkzeug wird zusammen mit dem rohrförmigen Ausgangsmaterial in ein hohlzylindrisches, weibliches Formwerkzeug hineingeschoben, wobei das Ausgangsmaterial durch eine Endkante des weiblichen Formwerkzeugs auf den zweiten zylindrischen Abschnitt geschoben wird und gleichzeitig gegen die Innenwand des weiblichen Formwerkzeugs gepresst wird. Anschließend wird das Formwerkzeug erhitzt, um das Ausgangsmaterial im umgeformten Zustand zu vulkanisieren.

Es ist daher Aufgabe der vorliegenden Entwicklung, ein einfaches und kostengünstiges Herstellungsverfahren zur Erzeugung von Kanälen in Bauteilen mit hoher Oberflächengüte bereitzustellen. Es ist ferner Aufgabe der vorliegenden Erfindung, ein Produkt umfassend zumindest einen Kanal bereitzustellen, welches einfach und kostengünstig hergestellt werden kann, und welches eine hohe Oberflächengüte der Kanäle aufweist.

Diese Aufgabe wird durch den Gegenstand des unabhängigen Anspruchs gelöst.

Bevorzugte Ausführungsformen ergeben sich aus den abhängigen Ansprüchen.

Gemäß eines ersten Aspekts der Erfindung wird ein Verfahren zum Ausbilden eines Kanals bereitgestellt, umfassend: Bereitstellen eines Vorförmlings mit einer darin ausgebildeten Ausnehmung; Erhitzen eines Kanalausbildungselements auf eine Temperatur über einer Schmelztemperatur eines Materials des Vorförmlings, wobei eine Außenkontur des Kanalausbildungselements zumindest bereichsweise einer Innenkontur des auszubildenden Kanals entspricht; und relatives Bewegen des erhitzten Kanalausbildungselements und/oder des Vorförmlings zueinander, so dass sich das erhitzte Kanalausbildungselement zumindest bereichsweise in die Ausnehmung in einer Hineinbewegungsrichtung hineinbewegt (wobei die Hineinbewegungsrichtung bevorzugt im Wesentlichen einer Ausbildungsrichtung des Kanals entspricht), wobei das Material des Vorförmlings in einem Bereich um die Ausnehmung zumindest teilweise aufgeschmolzen wird und zumindest teilweise durch das Kanalausbildungselement verdrängt wird, wobei so zumindest ein Teil des auszubildenden Kanals ausgebildet wird.

Der auszubildende Kanal ist insbesondere ein Innenkanal mit geschlossenem Querschnitt, welcher geeignet ist, ein Fluid zu führen bzw. zu transportieren. Insbesondere ist der Kanal fluiddicht. Derartige Kanäle können in Schlauchtüllen, formschlüssigen Verbindungselementen, formschlüssigen Einsätzen mit Gewinden, Verdrehsicherungen, Durchflusskunststoffteilen oder weiteren Produkten ausgebildet sein.

Unter "Vorförmling" wird dabei der Rohling mit einem noch ungenau vorgeformten Kanal verstanden. Das Verfahrensprodukt kann wiederrum ein Rohling für nachfolgende Verfahrensschritte wie z.B. das Zusammenschweißen einzelner Komponenten, die nach dem Verfahren gefertigt wurden, darstellen.

Der Vorförmling ist vorzugsweise länglich ausgebildet, und kann beispielsweise einen im Wesentlichen runden oder einen im Wesentlichen rechteckigen Querschnitt aufweisen. Besonders bevorzugt ist der Vorförmling im Wesentlichen zylinderförmig, was das Einspannen des Vorförmlings in die Kanalausbildungsvorrichtung erleichtert. Der Vorförmling ist aus einem schmelzbaren Material ausgebildet. Das schmelzbare Material kann jedes Schmelzbare Material sein, wie beispielsweise ein Metall oder ein Kunststoff. Vorzugsweise ist der Vorförmling jedoch aus einem Thermoplast ausgewählt aus der Gruppe von Polyethylen (PE), Low Density Polyethylen (LDPE), Linear Low Density Polyethylen (LLDPE), High Density Polyethylen (HDPE), hochwärmestabilem Polyethylen (PE-HWST), Polypropylen (PP), Polyvinylchlorid (PVC), Polycarbonat (PC), Copolyester, Acrylstyrolbutadiencopolymer (ABS) oder Styrolacrynitril (SAN); einem Elastomer, ausgewählt aus der Gruppe von Ethylen-Propylen-Dien-Monomer (EPDM) und Flüssigsilikon (LSR); einem thermoplastischen Elastomer (TPE), vorzugsweise auf Urethanbasis oder als Styrol-Blockcopolymer; einem Mehrkomponentenkunststoff, ausgewählt aus einer Mischung aus Polyethylen (PE) und Polypropylen (PP), Polypropylen (PP) und einem thermoplastischen Elastomer, Polycarbonat und einem thermoplastischen Elastomer, und Acrylstyrolbutadiencopoloymer (ABS) und Polypropylen (PP), ausgebildet. Besonders bevorzugt ist der Vorförmling aus High Density Polyethylen (HDPE), Polypropylen (PP), Low Density Polyethylen (LDPE), Linear Low Density Polyethylen (LLDPE), hochwärmestabilem Polyethylen (PE-HWST) oder Acrylstyrolbutadiencopolymer (ABS) ausgebildet. Am meisten bevorzugt ist der Vorförmling aus hochwärmestabilem Polyethylen (PE-HWST) ausgebildet. Der Vorförmling kann direkt mittels Extrusion hergestellt sein, oder aus einem Halbzeug, beispielsweise einem Rundprofil, hergestellt sein. Der Vorförmling kann beispielsweise auch aus einem kantigen Profil gedreht sein. Alternativ kann der Vorförmling auch spritzgegossen sein.

Die Ausnehmung weist vorzugsweise ebenfalls eine längliche Form auf, und erstreckt sich vorzugsweise in Längsrichtung des Vorförmlings. Vorzugsweise ist die Ausnehmung ein Loch, welches sich in das Innere des Vorförmlings erstreckt. Insbesondere kann es sich bei der Ausnehmung um ein Durchgangsloch bzw. eine durchgehende zylindrische Bohrung handeln, welche durch Bohren erzeugt werden kann. Je nach Geometrie des auszubildenden Kanals sind jedoch auch Löcher mit nicht runden Querschnitten denkbar. Derartige Löcher sind beispielsweise mittels Fräsen herstellbar. Auch kann der Vorförmling samt Ausnehmung spritzgegossen werden. Alternativ kann die Ausnehmung auch als längliche Rille oder Nut auf einer Oberfläche des Vorförmlings ausgebildet sein. In einem solchen Fall wird durch das Kanalausbildungselement lediglich ein Teilquerschnitt eines Kanals ausgebildet, und zur Ausbildung eines Innenkanals mit geschlossenem Querschnitt muss der Teilquerschnitt des Kanals zumindest mit einem weiteren Teilquerschnitt des Kanals verbunden werden, indem der Vorförmling zumindest mit einem weiteren Vorförmling verbunden wird, beispielsweise durch Verschweißen. Ferner ist das Kanalausbildungselement entformbar ausgebildet, so dass eine leichte Entformbarkeit gewährleistet ist.

Die Aufgabe der Ausnehmung ist es, insbesondere die Menge des aufzuschmelzenden Materials des Vorförmlings möglichst gering zu halten und zu ermöglichen, dass zumindest ein Teil des aufgeschmolzenen Materials durch das Kanalausbildungselement in Hineinbewegungsrichtung vor sich hergeschoben werden kann. Aus diesem Grund ist es nicht zwingend notwendig, dass die Ausnehmung ein Durchgangsloch ist, solange in der Ausnehmung zumindest ein Reservoir vorgesehen ist, welches die anfallende Menge an aufgeschmolzenen Material aufnehmen kann. Der Durchmesser der Ausnehmung sollte groß genug sein, dass das Kanalausbildungselement ohne einen zu hohen Widerstand und/oder ohne dass aufgeschmolzenes Material entgegen der Hineinbewegungsrichtung aus der Ausnehmung herausquillt, in den Vorförmling eingepresst werden kann. Beispielsweise kann die Ausnehmung hierfür einen Durchmesser größer als etwa 1 mm aufweisen. Andererseits sollte der Durchmesser der Ausnehmung klein genug sein, dass genügend aufgeschmolzenes Material und genügend hoher Druck im Inneren des Vorförmlings erzeugt werden kann, um den Kanal sauber auszubilden. Vorzugsweise weist die Ausnehmung zumindest in einer Dimension bzw. Richtung quer zur Hineinbewegungsrichtung einen Durchmesser auf, welcher kleiner ist als der Durchmesser des Kanalausbildungselements in derselben Dimension bzw. Richtung. Weiter bevorzugt weist die Ausnehmung in jeder Dimension bzw. Richtung quer zur Hineinbewegungsrichtung einen Durchmesser auf, welcher kleiner ist als der Durchmesser des Kanalausbildungselements in derselben Dimension bzw. Richtung. In anderen Worten liegt das Kanalausbildungselement vorzugsweise vollumfänglich an dem Vorförmling an.

Das Kanalausbildungselement ist vorzugsweise aus einem hochwärmefesten Material hergestellt. Für die Bearbeitung eines Vorförmlings aus einem thermoplastischen Kunststoff kann das Kanalausbildungselement aus Stahl oder Aluminium hergestellt sein. Für die Ausbildung von hohen Oberflächengüten des Kanals sowie für eine einfachere Entformung kann das Kanalausbildungselement gehont, geschliffen oder poliert sein. Die Oberfläche des Kanalausbildungselements kann auch zumindest teilweise beschichtet sein, beispielsweise mit Polytetrafluorethylen.

Die Temperatur des Kanalausbildungselements vor dem Hineinbewegen in die Ausnehmung liegt höher als die Schmelztemperatur des Materials des Vorförmlings und vorzugsweise unter der Zersetzungstemperatur des Materials des Vorförmlings. Es ist jedoch auch ein Temperaturbereich oberhalb der Zersetzungstemperatur möglich. Auch dann wird das zersetzte Material durch das Kanalausbildungselement aus dem Vorförmling ausgetragen. Die einzustellende Temperatur des Kanalausbildungselements hängt also vorrangig vom verwendeten Material des Vorförmlings ab. Weiterhin hängt die einzustellende Temperatur von der Geometrie (z.B. von der Länge, dem Querschnitt bzw. dem Querschnittsverlauf, usw.) des zu erzeugenden Kanals und/oder von der zu erzielenden Oberflächengüte des Kanals ab. Beispielsweise sollte die optimale Temperatur des Kanalausbildungselements für Low Density Polyethylen (LDPE) mindestens einen Wert zwischen etwa 100 °C und etwa 110 °C, für High Density Polyethylen (HDPE) zwischen etwa 125 °C und etwa 135 °C oder für Linear Low Density Polyethylen (LLDPE) zwischen etwa 122 °C und etwa 127 °C aufweisen. Das Kanalausbildungselement sollte bevorzugt bei Ausbildung des Kanals eine Temperatur größer als die mittlere Schmelztemperatur des für den Vorförmling benutzten Materials aufweisen, jedoch sollte die Temperatur kleiner als die Zersetzungstemperatur des für den Vorförmling benutzten Materials sein. Bevorzugt ist die Temperatur größer als etwa 110 % (weiter bevorzugt größer als etwa 120 %) der mittleren Schmelztemperatur des für den Vorförmling benutzten Materials und/oder kleiner als etwa 90 % (weiter bevorzugt kleiner als etwa 80%) der mittleren Zersetzungstemperatur des für den Vorförmling benutzten Materials. Z.B. beträgt die Zersetzungstemperatur von HDPE zwischen etwa 487 °C und etwa 497 °C, so dass die (arithmetisch ermittelte) mittlere Zersetzungstemperatur 492 °C beträgt. Ferner beträgt die Schmelztemperatur von HDPE zwischen etwa 125 °C und etwa 135 °C, so dass die (arithmetisch ermittelte) mittlere Schmelztemperatur 130 °C beträgt. Die Wärme zum Erhitzen des Kanalausbildungselements kann von Außen eingebracht werden, beispielsweise mittels Wärmestrahler. Vorzugsweise umfasst das Kanalausbildungselement jedoch eine innere Heizvorrichtung. Diese ermöglicht, dass das Kanalausbildungselement auch während des Hineinbewegens in die Ausnehmung des Vorförmlings beheizt bzw. erhitzt werden kann. Die Heizvorrichtung kann beispielsweise zumindest eine Heizpatrone umfassen. Des Weiteren kann das Kanalausbildungselement Temperaturfühler umfassen, so dass die Temperatur des Kanalausbildungselements auch während des Hineinbewegens in die Ausnehmung des Vorförmlings erfasst werden kann und derart geregelt werden kann, dass sie einen konstanten Wert hält, oder einen sonstigen optimalen Verlauf annimmt. Falls keine innere Heizvorrichtung verwendet wird (z.B. wenn das Kanalausbildungselement mittels eines IR-Strahlers von Außen erhitzt wird und/oder zum Erhitzen von einem heißen Fluids (z.B. heißer Luft) durchströmt wird), ist es vorteilhaft das Kanalausbildungselement auf eine Temperatur deutlich über der Schmelztemperatur des Materials des Vorförmlings erhitzt werden, da das Kanalausbildungselement beim Eintauchen in den Vorförmling abkühlt. Bei einem Vorförmling aus HDPE und bei Verwendung einer Heizpatrone mit integriertem Messfühler zum Erhitzen des Kanalausbildungselements wird z.B. die Heizpatrone derart gesteuert bzw. geregelt, dass der Temperaturfühler eine Temperatur von zwischen etwa 150 °C und etwa 320 °C, bevorzugt zwischen etwa 170 °C und etwa 280 °C, am meisten bevorzugt zwischen etwa 180 °C und etwa 250 °C misst. Es ist daher möglich, dass die Oberflächentemperatur des Kanalausbildungselements für HDPE (z.B. aufgrund der vorkommenden Wärmeverluste) bevorzugt zwischen etwa 180 °C und etwa 220 °C liegt.

Die Außenkontur des Kanalausbildungselements entspricht zumindest bereichsweise der Innenkontur des auszubildenden Kanals. Im Fall einer länglichen Ausnehmung, die sich in Längsrichtung des Vorförmlings in das Innere des Vorförmlings erstreckt, insbesondere in Form einer zylindrischen Bohrung, weist das Kanalausbildungselement ebenfalls eine längliche Form bzw. eine Form eines Dorns auf. Ein solcher Dorn wird koaxial mit der Längsachse der Ausnehmung in die Ausnehmung hineinbewegt, wobei in der Endposition des Hineinbewegens der Querschnitt des Dorns dem Querschnitt des Kanals an der entsprechenden Position entspricht. Im Fall einer Ausnehmung, die als längliche Rille oder Nut auf einer Oberfläche des Vorförmlings ausgebildet ist, kann das Kanalausbildungselement auch eine andere Form bzw. Außenkontur aufweisen, beispielsweise die Form einer Platte, die mit der langen Kante bzw. Stirnfläche in die Rille oder Nut hineinbewegt wird. In einem solchen Fall ist die Hineinbewegungsrichtung senkrecht zur Längsrichtung des auszubildenden Kanals, und der Teilquerschnitt des vorderen Bereichs der langen Kante bzw. Stirnfläche des Kanalausbildungselements quer zur Längsrichtung des auszubildenden Kanals entspricht dem Teilquerschnitt des auszubildenden Kanals. Je nach gewünschter Innenkontur des Kanals sind jegliche Außenkonturen des Kanalausbildungselements denkbar. Das Kanalausbildungselement kann quer zur Hineinbewegungsrichtung in die Ausnehmung beispielsweise einen runden, ovalen, elliptischen, dreieckigen, rechteckigen, quadratischen oder fünf-, sechs- oder mehreckigen Querschnitt bzw. eine Kombination hiervon aufweisen. Das Kanalausbildungselement kann auch ein Schraubenprofil aufweisen, um ein Kanal mit einem Schraubenprofil auszubilden. Bei einem dornförmigen Kanalausbildungselement muss hierbei das Kanalausbildungselement zumindest beim Herausbewegen aus der Ausnehmung um seine Längsachse rotiert werden, vorzugsweise in umgekehrter Rotationsrichtung auch beim Hineinbewegen in die Ausnehmung.

Das relative Bewegen des erhitzten Kanalausbildungselements und des Vorförmlings zueinander wird vorzugsweise durch eine Pressvorrichtung vorgenommen. Die Pressvorrichtung kann eine Werkstückaufnahme und eine Einspannvorrichtung für das Kanalausbildungselement umfassen. Werkstückaufnahme und Einspannvorrichtung können gegenüberliegend auf einem Schlitten angeordnet sein, so dass sie gegenseitig verschoben werden können. In anderen Worten können Werkstückaufnahme und/oder Einspannvorrichtung linear aufeinander zu oder voneinander weg bewegt werden. Hierbei ist eine präzise und korrekte Ausrichtung des Vorförmlings und der Ausnehmung zu dem Kanalausbildungselement wichtig, wobei diese bevorzugt mittels einer konischen Einspannvorrichtung erfolgt. Insbesondere sollte beispielsweise im Falle einer zylindrischen Ausnehmung und eines dornförmigen Kanalausbildungselements die Längsachse der Ausnehmung und die Längsachse des Kanalausbildungselements koaxial ausgerichtet sein. Zur präzisen korrekten Einspannung des Vorförmlings in der Werkstückaufnahme ist eine zylindrische Form des Vorförmlings vorteilhaft. Zur präzisen und korrekten Einspannung des Kanalausbildungselements in der Einspannvorrichtung kann das Kanalausbildungselement einen vorzugsweise zylindrischen oder konischen Einspannbereich aufweisen, der sich an den kanalausbildenden Teil anschließt. Der Einspannbereich des Kanalausbildungselements kann vorzugsweise die Heizvorrichtung beinhalten.

Durch Verfahren des Vorförmlings und des Kanalausbildungselements zueinander wird das erhitzte Kanalausbildungselement zumindest bereichsweise in die Ausnehmung in einer Hineinbewegungsrichtung hineinbewegt, wobei das Material des Vorförmlings in einem Bereich um die Ausnehmung zumindest teilweise aufgeschmolzen wird und zumindest teilweise durch das Kanalausbildungselement verdrängt wird. In anderen Worten wird das Kanalausbildungselement in den Vorförmling eingetaucht bzw. eingepresst. Der Vorförmling braucht vor dem Einpressen des Kanalausbildungselements nicht aufgewärmt oder erhitzt werden, wobei jedoch eine derartige Ausführungsform denkbar wäre. Denkbar wäre ebenfalls, den Vorförmling vor dem Einpressen des Kanalausbildungselements zu kühlen, oder auf eine vordefinierte Temperatur zu bringen. Die optimale Einpresskraft und Vorschubgeschwindigkeit hängt von den Faktoren wie z.B. Größe des auszubildenden Kanals, Größenverhältnis des Kanalausbildungselements zur Ausnehmung, Material des Vorförmlings und Temperatur des Kanalausbildungselements ab. Bei zu hohen Vorschubgeschwindigkeiten bzw. Einpresskräften und zu niedrigen Temperaturen des Kanalausbildungselements kommt es zu unsauber ausgeformten Kanälen und hohen Oberflächenrauhigkeiten der Kanäle. Die Geschwindigkeit muss wird vorteilhaft so gewählt werden, dass das Material vor und an dem Kanalausbildungselement angeschmolzen und verdrängt werden kann, das Kanalausbildungselement jedoch beim Eintauchen nicht zu stark abkühlt. Bei zu geringen Vorschubgeschwindigkeiten bzw. Einpresskräften und/oder zu hohen Temperaturen des Kanalausbildungselements kann es vorkommen, dass zu viel Material aufgeschmolzen wird und unkontrolliert zu fließen beginnt. Der Vorförmling und das Kanalausbildungselement können mit einer Geschwindigkeit von zwischen etwa 4 bis etwa 12 mm/sec, bevorzugt mit einer Geschwindigkeit von zwischen etwa 6 bis etwa 10 mm/sec, besonders bevorzugt mit einer Geschwindigkeit von etwa 8 mm/sec zueinander Verfahren werden.

Bevorzugt ist der Vorförmling zumindest teilweise aus High Density Polyethylen (HDPE) ausgebildet und das Kanalausbildungselement wird auf eine Temperatur an der Oberfläche von zwischen etwa 180 °C und etwa 220 °C erhitzt.

Bevorzugt wird die Temperatur des Kanalausbildungselements größer als etwa 110 % (weiter bevorzugt größer als etwa 120 %) der mittleren Schmelztemperatur des für den Vorförmling benutzten Materials und/oder kleiner als etwa 90 % (weiter bevorzugt kleiner als etwa 80%) der mittleren Zersetzungstemperatur des für den Vorförmling benutzten Materials eingestellt.

Das erfindungsgemäße Verfahren bietet gegenüber herkömmlichen Verfahren zum Ausbilden von Kanälen die folgenden Vorteile:
Dadurch, dass der Vorförmling lediglich lokal erhitzt wird und lediglich Material im Bereich um die Ausnehmung aufgeschmolzen wird, findet nur eine geringe Schrumpfung des gesamten Materials des Vorförmlings statt. Dies ermöglicht neben einer hohen Bauteilgenauigkeit auch, dass keine oder nur eine geringe Entformungsschräge auf dem Kanalausbildungselement nötig ist, um das Kanalausbildungselement nach Ausbilden des Kanals sicher vom Vorförmling zu trennen. Dies ermöglicht wiederum das Ausbilden von Kanälen mit konstantem Querschnitt und konstanten Wandstärken über die gesamte Bauteillänge, was beispielsweise für den Einsatzfall in einer Vorrichtung zur UltraschallDurchflussmessung für eine hohe Reproduzierbarkeit der Messergebnisse vorteilhaft ist.

Ferner können durch das erfindungsgemäße Verfahren Kanäle mit hohen bzw. feinen Oberflächengüten in einem Prozessschritt ausgebildet werden. Dadurch wird das Verfahren schnell und kostengünstig. Die besonders gute Oberflächengüte führt zu einem optimalen Strömungsverhalten eines Fluids im Inneren des Kanals, da es keine Turbulenzen durch hohe Oberflächenrauhigkeiten, Bearbeitungsriefen oder Formtrenngrade gibt. Die hohe Oberflächengüte ist auch teilweise darauf zurückzuführen, dass durch die festen Bereiche des Vorförmlings beim Einpressen des Kanalausbildungselements in den Vorförmling hohe Drücke quer zur Hineinbewegungsrichtung im Inneren des Vorförmlings erzeugt werden können.

Gemäß der Erfindung wird zum Ausbilden zumindest eines Teils des auszubildenden Kanals
durch das Kanalausbildungselement das Material des Vorförmlings ausschließlich in einem angrenzenden Bereich der Ausnehmung, also dem Bereich um die Ausnehmung, aufgeschmolzen, während restliche Bereiche des Vorförmlings in einem festen Zustand bleiben.

In anderen Worten wird das Material des Vorförmlings lediglich lokal im Bereich um die Ausnehmung herum aufgeschmolzen, während die Äußere Oberfläche des Vorförmlings sich nur geringfügig aufgrund der Wärmeleitfähigkeit des Materials erwärmt.

Vorteilhafter Weise ermöglicht dies das Einspannen des Vorförmlings in einer Werkstückaufnahme und somit ein einfaches Bearbeiten. Ferner findet eine geringe Schrumpfung des gesamten Materials des Vorförmlings statt, wobei diese für eine korrekte Ausbildung des Kanals berücksichtigt werden kann. Weiter vorteilhaft können beim Einpressen des Kanalausbildungselements in den Vorförmling hohe Drücke quer zur Hineinbewegungsrichtung im Inneren des Vorförmlings erzeugt werden, da die feste Hülle des Vorförmlings den Vorförmling zusammenhält.

Vorzugsweise wird das Kanalausbildungselement nach Abkühlen und zumindest teilweises Verfestigen des aufgeschmolzenen Materials des Vorförmlings aus dem Vorförmling hinausbewegt.

Beim Abkühlen und Verfestigen des aufgeschmolzenen Materials des Vorförmlings wird der Vorförmling in einen Zustand gebracht, in dem das Kanalausbildungselement aus dem Vorförmling entfernt werden kann, ohne dass der Vorförmling verformt oder beschädigt wird bzw. ohne dass die Oberflächengüte des Kanals herabgesetzt wird. Das Material des Vorförmlings muss hierbei nicht zwingend auf Raumtemperatur gebracht werden. Es kann ausreichend sein, wenn die Temperatur etwa unter der Erweichungstemperatur des Materials des Vorförmlings liegt. Vorteilhaft ist, dass das Material auf eine Temperatur abgekühlt wird, bei der das Material nicht mehr fließt und plastisch stabil bleibt. Die Oberflächengüte des ausgebildeten Kanals hängt von der Oberflächengüte des Kanalausbildungselements und der Verweilzeit des Kanalausbildungselements im in dem Vorförmling ab. Das Kanalausbildungselement kann mit einer Geschwindigkeit von von zwischen etwa 1 bis etwa 9 mm/sec, bevorzugt mit einer Geschwindigkeit von zwischen etwa 3 bis etwa 7 mm/sec, besonders bevorzugt mit einer Geschwindigkeit von etwa 5 mm/sec aus dem Vorförmling herausbewegt werden. Vorzugsweise ist die Geschwindigkeit des Hinausbewegens niedriger als die Geschwindigkeit des Hineinbewegens. Für ein schnelleres Abkühlen kann eine Kühlung von Außen, beispielsweise ein Gebläse, vorgesehen sein. Alternativ oder zusätzlich kann das Kanalausbildungselement eine Kühlvorrichtung aufweisen, welche das Kanalausbildungselement aktiv kühlt, wie beispielsweise ein Kühlkreislauf oder eine Peltier-Element.

Vorteilhafter Weise wird durch das Abkühlen und zumindest teilweises Verfestigen des aufgeschmolzenen Materials des Vorförmlings im Zustand des eingeführten Kanalausbildungselements eine hohe Konturgenauigkeit und Oberflächengüte des Kanals erreicht.

Vorzugsweise weist das Kanalausbildungselement entlang einer Ausbildungsrichtung des Kanals zumindest bereichsweise einen sich verändernden Querschnitt auf.

Vorteilhafterweise kann durch eine derartige Konfiguration des Kanalausbildungselements ein Kanal mit einem sich über seine Längsrichtung verändernden Querschnitt erzeugt werden. Der sich verändernde Querschnitt ist hierbei zumindest in dem Bereich des Kanalausbildungselements vorgesehen, welcher den Kanal ausbildet, also welcher in den Vorförmling eingeführt wird. Die Querschnittsveränderung ist vorzugsweise derart ausgebildet, das sich das Kanalausbildungselement in Hineinbewegungsrichtung verjüngt, also das der Querschnitt zur Spitze des Kanalausbildungselements hin abnimmt.

Vorzugsweise ist die Ausnehmung zumindest teilweise eine im Wesentlichen zylindrische Ausnehmung, welche eine axiale Länge größer als ihr Durchmesser aufweist; das Kanalausbildungselement weist die Form eines Dorns auf; und die Hineinbewegungsrichtung des Kanalausbildungselements in die Ausnehmung entspricht der axialen Richtung der Ausnehmung.

Die zylindrische Ausnehmung kann sich durch den Vorförmling erstrecken, d.h. an beiden Enden des Vorförmlings offen sein. Die Ausnehmung kann an ihrem dem Kanalausbildungselement abgewandten Ende bzw. an ihrer dem Kanalausbildungselement abgewandten Seite einen Bereich mit einem aufgeweiteten Durchmesser aufweisen. Dieser Bereich mit aufgeweitetem Durchmesser kann als Reservoir bezeichnet werden, welcher aufgeschmolzenes Material, das durch das Kanalausbildungselement verdrängt wird bzw. vor sich hergeschoben wird, aufnehmen kann. Hierdurch kann verhindert werden, dass aufgeschmolzenes Material durch das Kanalausbildungselement aus dem Vorförmling herausgequetscht wird, und dass aufgeschmolzene oder zersetzte Material aus dem Vorförmling ausgetragen wird. Der Bereich des Reservoirs wird vorzugsweise nach dem Ausbilden des Kanals abgetrennt.

Vorzugsweise umfasst das erfindungsgemäße Verfahren: Bereitstellen einer Mehrzahl von Vorförmlingen; Ausbilden eines Teils des Kanals in jedem der Vorförmlinge mittels des Kanalausbildungselements; und Verbinden der Vorförmlinge miteinander derart, dass ein durchgehender Kanal ausgebildet wird.

In anderen Worten können in verschiedenen Vorförmlingen separat Kanäle erfindungsgemäß ausgebildet werden und die daraus entstehenden Produkte können als Zwischenprodukte, die für sich wiederrum "Vorförmlinge" bzw. "Rohlinge" darstellen, zu einem weiteren Produkt zusammengesetzt bzw. -gefügt werden.

Hierbei werden die Teile des Kanals in den Vorförmlinge gemäß des vorstehend beschriebenen erfindungsgemäßen Verfahrens ausgebildet. Vorzugsweise werden die Vorförmlinge nach dem Ausbilden der Teile der Kanäle miteinander verbunden. Das Verbinden kann beispielsweise ein Verschweißen sein. Die Vorförmlinge können auch klebetechnisch, vorzugsweise durch Klebeverfahren oder Umspritzverfahren, oder mechanisch, vorzugsweise durch Verschrauben oder Verklemmen miteinander verbunden werden. So können Kanäle mit beliebigen Längen erzeugt werden. Vorzugsweise können in jedem der Vorförmlinge Teile von Kanälen bzw. Kanalabschnitte mit einer Länge von zwischen etwa 10 mm und etwa 150 mm, vorzugsweise von zwischen etwa 30 mm und etwa 120, weiter vorzugsweise von zwischen etwa 40 mm und etwa 90 mm ausgebildet werden.

Vorzugsweise werden die Vorförmlinge durch Verschweißen verbunden, wobei zumindest ein Verschweißungs-Flansch an den zu verschweißenden Flächen der Vorförmlinge ausgebildet wird. Der Verschweißungs-Flansch dient insbesondere als Schweißdamm, der bei dem Verschweißungsprozeß aufgeschmolzen und/oder plastisch verformt wird und zu einem Stoffschluß und/oder Formschluß mit dem komplementären Vorförmling dient. Somit dient der Schweißdamm als zusätzlicher Materialgeber während des Schweißprozesses. Dabei ist der Schweißdamm symmetrisch um die Kanalkontur angeordnet.

Bevorzugt umfassen die Vorförmlinge: einen Anschlag-Flansch, welcher als Anschlag und/oder Abdichtungsflansch der Teile der Kanäle der Vorförmlinge dient; wobei der Anschlag-Flansch bevorzugt radial innerhalb des Verschweißungs-Flansches angeordnet ist; und/oder einen Sichtschutz-Flansch, welcher als Sichtschutz dient und bevorzugt radial außerhalb des Verschweißungs-Flansches angeordnet ist. Der Sichtschutz-Flansch verdeckt somit die eigentliche Schweißnaht. Die Flansche (d.h. die Verschweißungs-Flansche, die Anschlag-Flansche und/oder die Sichtschutz-Flansche) werden vorzugsweise nach dem Ausbilden der jeweiligen Teile des auszubildenden Kanals in den Vorförmlingen ausgebildet. Vor dem Ausbilden des Flansches (Verschweißungs-, Anschlag- und/oder Sichtschutz-Flansches) können Bereiche des Vorförmlings, in denen sich Unregelmäßigkeiten durch das aufgeschmolzene und durch das Kanalausbildungselement verdrängte Material gebildet haben, abgetrennt werden. Der Flansch bzw. die Flansche können durch Drehen und/oder Fräsen ausgebildet werden. Der (bevorzugt außenliegende) Sichtschutz-Flansch kann als ringförmiger bzw. geschlossener, umlaufender Vorsprung ausgebildet sein, so dass ein entsprechender zu verschweißender Vorförmling mit einem abgestuften Bereich geringeren Durchmessers an dem zu verschweißenden Ende in den Innenbereich des außenliegenden Flansches eingeführt werden kann. Der (bevorzugt außenliegende) Sichtschutz-Flansch ist also nur auf einem der zwei zu verschweißenden Vorförmlinge ausgebildet, wogegen der andere der zwei zu verschweißenden Vorförmlinge (bevorzugt außenliegend) einen abgestuften Bereich aufweist, welcher einen geringeren Durchmesser aufweist als der Innendurchmesser des Sichtschutz-Flansches. Der Verschweißungs-Flansch kann ebenfalls als ringförmiger bzw. geschlossener, umlaufender Vorsprung ausgebildet sein, wobei dieser Flansch mehr als die anderen Flansche von dem Vorförmling hervorsteht, um einen Kontakt dieser Bereiche der Vorförmlinge beim Verschweißen sicherzustellen und möglichst viel Material miteinander zu verschweißen. Der (bevorzugt innenliegende) Anschlag-Flansch ist vorzugsweise ebenfalls als geschlossener, umlaufender Vorsprung ausgebildet, wobei jedoch die Innenkontur des Flansches der Kontur des Kanals entspricht, und wobei dieser Flansch weniger als die anderen Flansche von dem Vorförmling hervorsteht. Der Anschlag-Flansch weist bevorzugt zur Längsrichtung des Kanals im Wesentlichen senkrechte, plane Anschlagsflächen auf. Vorteil des Anschlag-Flansches ist insbesondere die dadurch vereinfachte glatte Ausbildung des Kanals auch im Übergangsbereich zwischen den Vorförmlingen.

Vorzugsweise umfasst das Verbinden der Vorförmlinge: Ausrichten und Führen der zu verbindenden Vorförmlinge durch Einführen eines Führungsdorns mit einer Außenkontur, welcher zumindest bereichsweise der Innenkontur der Teile des Kanals der zu verschweißenden Vorförmlinge entspricht, wobei der Führungsdorn durch den Teil des Kanals des einen Vorförmlings hindurch zumindest teilweise in den Teil des Kanals des anderen Vorförmlings eingeführt wird. Im Falle einer Schweißverbindung kann das Verbinden mit dem eingeführten Führungsdorn weiter umfassen: Aufschmelzen des Materials des zu verschweißenden Bereichs der Vorförmlinge; und Gegeneinanderpressen der Vorförmlinge entlang des Führungsdorns zum Verschweißen der Vorförmlinge. Somit ermöglicht der Führungsdorn eine Ausrichtung der Vorförmlinge zueinander und verhindert, dass während des Schweißens etwaiges Schweiß-Material in den Kanal eindringen kann.

Denkbar ist jedoch ebenfalls ein Ausrichtungsdorn, der an einem Höhenanschlag in der jeweiligen Spannzange für die Vorförmlinge vorgesehen ist, so dass die Spannzangen zueinander korrekt ausgerichtet sind.

Insbesondere wird beim Aufschmelzen der Vorförmling lediglich angeschmolzen, wobei dessen Material zumindest teilweise verflüssigt wird, jedoch wird bevorzugt kein zusätzliches Material auftragen.

Das Aufschmelzen des Materials des zu verschweißenden Bereichs der Vorförmlinge kann beispielsweise mittels einer Heizplatte oder mittels eines Lasers oder mittels Mikrowellen vorgenommen werden. Die Vorförmlinge können jedoch auch ultraschallverschweißt oder vibrationsverschweißt werden, wobei dann das Aufschmelzen des Materials und das Gegeneinanderpressen gleichzeitig vorgenommen werden kann. Die Vorförmlinge werden beim Verschweißen so lange gegeneinandergepresst und aufeinander zubewegt, bis die Anschlagsflächen der innenliegenden Flansche zum Anschlag kommen und ein durchgehender, abgedichteter Kanal ausgebildet wird. Da beim Verschweißen der Vorförmlinge durch das Aufschmelzen des Materials eine relative Verschiebung der Vorförmlinge zueinander stattfindet, kann der Führungsdom konfiguriert sein, der Bewegung eines Vorförmlings zu folgen.

Vorteilhafter Weise werden durch den Führungsdorn die Teile der Kanäle der jeweiligen Vorförmlinge präzise zueinander ausgerichtet, so dass nach dem Verschweißen der Vorförmlinge ein im Wesentlichen glatter Übergang im Inneren des Kanals entsteht. Ferner verhindert der vollflächig anliegende Führungsdorn, dass aufgeschmolzenes Material während des Verschweißens, oder beispielsweise Klebstoff im Falle einer Klebverbindung, ins Innere des Kanals gelangt.

Vorzugsweise umfasst das erfindungsgemäße Verfahren: Bereitstellen von drei Vorförmlingen; Ausbilden eines ersten Teils des Kanals in einem ersten der Vorförmlinge mittels eines ersten Kanalausbildungselements in Form eines Dorns, wobei ein Einführungsabschnitt des ersten Kanalausbildungselements zumindest bereichsweise einen sich zur Spitze des ersten Kanalausbildungselements hin kontinuierlich verändernden Querschnitt aufweist, wobei sich der Querschnitt zur Spitze hin von einem im Wesentlichen runden zu einem im Wesentlichen rechteckigen Querschnitt verändert; Ausbilden eines zweiten Teils des Kanals in einem zweiten der Vorförmlinge mittels eines zweiten Kanalausbildungselements in Form eines Dorns, wobei ein Einführungsabschnitt des zweiten Kanalausbildungselements einen im Wesentlichen rechteckigen Querschnitt aufweist, welcher dem rechteckigen Querschnitt im Bereich der Spitze des ersten Kanalausbildungselements entspricht; Ausbilden eines dritten Teils des Kanals in einem dritten der Vorförmlinge mittels des ersten Kanalausbildungselements; und nach dem Ausbilden der Teile der Kanals, Verbinden des ersten und dritten Vorförmlings mit dem zweiten Vorförmling derart, dass ein durchgehender Kanal ausgebildet wird, wobei sich der Querschnitt des Kanals von einem im Wesentlichen runden Querschnitt zunächst kontinuierlich zu einem im Wesentlichen rechteckigen Querschnitt ändert, und zum Ende des Kanals hin sich von dem im Wesentlichen rechteckigen Querschnitt zu dem im Wesentlichen runden Querschnitt kontinuierlich verändert.

Mit Einführungsabschnitt des Kanalausbildungselements ist der Abschnitt gemeint, der sich in der Endposition des Kanalausbildungselements in Hineinbewegungsrichtung in den Vorförmling, also im vollständig Eingeführten Zustand, im Inneren des Vorförmlings befindet. Es kann vorteilhaft sein, dass das erste Kanalausbildungselement im Bereich seiner Spitze bzw. an seinem vorderen Ende einen Bereich mit einem konstanten Querschnitt aufweist. So kann sichergestellt werden, dass sich die Konturen der Kanäle der zu verschweißenden Vorförmlinge entsprechen, auch wenn ein Teil des Endes des Vorförmlings abgetrennt wird, beispielsweise zur Entgratung und/oder zum Ausbilden des Verschweißungs-Flansches. Der im Wesentlichen rechteckige Querschnitt des Kanalausbildungselements bzw. des Kanals kann ein im Wesentlichen quadratischer Querschnitt sein. Ferner können die Ecken des im Wesentlichen rechteckigen Kanalquerschnittes gefast sein.

Vorteilhafter Weise kann durch das oben beschriebene Verfahren kostengünstig und einfach ein qualitativ hochwertiger Kanal für ein Durchflussteil in einer Vorrichtung zum Einbau in ein Schlauch- und/oder Rohrsystem und Anbringen von Durchflussmesssensoren hergestellt werden. Insbesondere kann nach dem Ausbilden des Kanals der Vorförmling von Außen bearbeitet werden, beispielsweise durch spanende Bearbeitung wie Drehen und Fräsen, um so ein Produkt mit einer gewünschten Außenkontur bzw. Außenform zu erzeugen. Nachfolgend beschrieben wird ein Produkt, umfassend zumindest einen Kanal, wobei der Kanal durch Aufschmelzen von Material des Produkts mittels eines in das Produkt eingeführten Kanalausbildungselements und anschließendem Verfestigen des Materials ausgebildet wurde; zumindest ein Teil einer Außenkontur des Kanalausbildungselements zumindest bereichsweise einer Innenkontur des Kanals entspricht; und das Kanalausbildungselement auf eine Temperatur über einer Schmelztemperatur des Materials des Produkts erhitzt wurde, um das Material des den Kanal ausbildenden Bereichs des Produkts aufzuschmelzen.

Das Produkt kann beispielsweise durch das erfindungsgemäße Verfahren zum Ausbilden eines Kanals hergestellt sein. Es gilt das oben zum erfindungsgemäßen Verfahren genannte entsprechend auch für das erfindungsgemäße Produkt.

Vorzugsweise weisen die Innenflächen des Kanals eine Oberflächenrauhigkeit in etwa von unter Ra ≤ 1 µm, vorzugsweise Ra ≤ 0,5 µm, weiter vorzugsweise Ra ≤ 0,2 µm, noch weiter bevorzugt Ra ≤ 0,15 µm auf.

Oberflächenrauhigkeiten können auf verschiedene Weisen gemessen werden. Bevorzugt Insbesondere wird die Oberflächenrauhigkeit mit einem Perthomether der Firma Zeiss gemäß DIN EN ISO 4287 gemessen.

Vorzugsweise wurde bzw. wird die äußere Form des Produkts durch spanende Bearbeitung erzeugt.

Die spanende Bearbeitung kann Fräsen und/oder Drehen umfassen.

Vorzugsweise ist das Produkt aus einer Mehrzahl von miteinander verschweißten Teilabschnitten ausgebildet, wobei der Kanal sich durch die Teilabschnitte hindurch erstreckt.

Vorzugsweise ist das Produkt ein Durchflussteil mit einem mittig angeordneten und verformbaren Bereich mit rechteckigem Außenquerschnitt, wobei an der Außenfläche des mittig angeordneten Bereichs zwei gegenüberliegende Sensorkontaktflächen und zwei gegenüberliegende Druckbereichsflächen angeordnet sind, und wobei zwei Anschlussbereiche zum Anschließen an Schläuche und/oder Kunststoffrohre den mittig angeordneten Bereich flankieren.

Vorzugsweise geht der Querschnitt des Kanals in den Anschlussbereichen von einem im Wesentlichen runden in einen im Wesentlichen rechteckigen Querschnitt über.

Vorzugsweise sind die Druckbereichsflächen und die Sensorkontaktflächen des mittig angeordneten Bereichs über Dünnstellen, vorzugsweise Filmscharniere, Gelenke oder über ein Mehrkomponentenkunststoffsystem miteinander verbunden.

Vorzugsweise weisen die Sensorkontaktflächen ebene Außenflächen auf, und/oder die Sensorkontaktflächen sind parallel zueinander angeordnet.

Vorzugsweise weisen die Druckbereichsflächen Profile als Kontaktflächen für ein sich darum durch Druck zu schließendes Durchflussmessgerät auf.

Vorzugsweise setzt sich das Produkt aus bis zu drei Einzelbauteilen, umfassend den mittig angeordneten Bereich und die den mittig angeordneten Bereich flankierenden Anschlussbereiche zusammen.

Insbesondere kann das Produkt als Durchflussteil in einer Vorrichtung zum Einbau in ein Schlauch- und/oder Rohrsystem und Anbringen von Durchflussmesssensoren eingesetzt werden.

Bei einer Vielzahl an Verfahren in der Automation industrieller oder labortechnischer Prozesse werden Durchflussmessungen in Rohr- und Schlauchsystemen durchgeführt. Dazu werden Durchflussmesser überall dort eingebaut, wo die Momentanabgabe im Rohr- oder Schlauchnetz erfasst oder aber der Durchfluss kontrolliert und weiter verarbeitet werden soll. Die Durchflussmessung bildet dabei neben Temperatur, Druck und Kraft eine der wichtigsten Größen in der industriellen Messtechnik und ist eine wesentliche Grundlage der Prozessautomatisierung. Besondere Vorteile der Durchflussmessungen von Außen sind unter anderem die kontaktlose Messung des Mediums und die dadurch bevorzugt eliminierte Kontaminationgefahr, und zwar auch während der Reinigung des Fluidsystems. Darüber hinaus kann so eine hohe Genauigkeit selbst bei niedrigen Durchflussgeschwindigkeiten gewährleistet werden.

Die Durchflussmessungen bei automatisierten Prozessen variieren je nach Messverfahren und dem zu messenden Medium. Man unterscheidet dabei mechanisch-volumetrische, thermische, akustische, magnetisch-induktive, optische, gyroskopische oder Wirkdruck-/Stauverfahren. Allen Verfahren gemeinsam ist jedoch die Aufnahme bestimmter physikalischer Eigenschaften, z.B. Temperatur, Druck, Schall, Beschleunigung, Drehzahl etc., über einen Messsensor.

Bei geschlossenen Rohr- oder Schlauchleitungssystemen werden die Durchflussmessungen je nach Medium und Ausgabesignal in zwei Untergruppen unterteilt: nämlich Volumendurchfluss und Massendurchfluss. Weiterhin unterscheidet man je nach Messanordnung sogenannte Clamp-On-Durchflussmessgeräte von In-Line-Durchflussmessungen. Bei den In-Line-Durchflussmessungen werden die Messsensoren im Strömungsprofil des zu messenden Mediums angebracht, wohingegen die Clamp-On-Systeme von Außen auf das Rohr oder den Schlauch aufgesetzt und festgeklemmt werden.

Ein solches Clamp-On-System wird in der JP 04940384 B1 beschrieben. Sie offenbart ein Ultraschalldurchflussmessgerät bei dem ein Schlauch, durch den das zu messende Fluid strömt, in eine Scharnier-Messvorrichtung eingelegt und durch Zusammendrücken der Messvorrichtung fixiert wird. Durch die Verformung des Schlauches wird das Strömungsprofil des zu messenden Mediums in ein nahezu rechteckiges Profil überführt. Durch Schwankungen in der Dichte und der Dicke der verwendeten Schläuche sowie den dadurch bedingten Schwankungen des Innenquerschnitts kann es jedoch zu gravierenden Messungenauigkeiten bei der Bestimmung des Volumendurchflusses kommen. Sowohl die Reproduzierbarkeit der Messergebnisse als auch die Kalibrierung des Gesamtsystems werden dadurch ebenfalls stark beeinträchtigt. Darüber hinaus kann sich der Schlauch während der Anwendung innerhalb der Messeinheit verbiegen oder verdrehen oder aber direkt hinter der Messeinheit abknicken, was ebenfalls zu Messungenauigkeiten führt.

Für starre Rohrsysteme ist ein festes Bauteil aus US 6026693 bekannt, das über entsprechende Fittings oder Flansche in ein Rohrsystem eingebaut werden kann. An dem rechtwinklig geformten Bauteil sind direkt hinter den Flanschbereichen von außen Ultraschall-Messsensorpaare angebracht. Durch das Bauteil wird das zu messenden Fluid ohne Übergang von einem runden in ein eckiges Strömungsprofil überführt. Durch den abrupten Übergang von einem runden in ein eckiges Strömungsprofil kommt es zu turbulenten Strömungen, die die Durchflussmessung negativ beeinflussen können. Das starre Bauteil ist für feste Rohrleitungen mit Durchmessern von 2 bis 24 inches (5,08 bis 60,96 cm) geeignet. Durch die bauliche Einheit aus Sensoren und dem eigentlichen Durchflussbauteil mit definiertem Querschnitt ist keine Varianz in Bezug auf die anzuschließenden Messaufnehmer einerseits und die Rohrdurchmesser andererseits möglich.

Vorteilhaft wäre es daher, eine Vorrichtung zur Durchflussmessung bereit zu stellen, die sich zum Einsatz in einem Kunststoffschlauch- und/oder Kunststoffrohrsystem eignet und dabei die zuvor genannten Nachteile im Stand der Technik vermeidet. Weiterhin wäre es vorteilhaft, ein Verfahren zur Durchflussmessung unter

Verwendung einer solchen Vorrichtung bereit zu stellen.

Das Produkt ist als Durchflussteil, insbesondere als Durchflusskunststoffteil, geeignet für eine Vorrichtung zum Einbau in ein Kunststoffschlauch- und/oder Kunststoffrohrsystem und Anbringen von Durchflussmessaufnehmern, die das Durchflusskunststoffteil als Hohlkörper mit einem mittig angeordneten und verformbaren Bereich mit rechteckigem Querschnitt aufweist, wobei an der Außenfläche des mittig angeordneten Bereichs zwei gegenüberliegende Sensorkontaktflächen und zwei gegenüberliegende Druckbereichsflächen angeordnet sind, und wobei zwei Anschlussbereiche zum Anschließen an Schläuche und/oder Kunststoffrohre den mittig angeordneten Bereich flankieren.

Das Produkt ist so gestaltet, dass von Außen eine Sensormanschette oder ein Sensorgehäuse angebracht werden kann. Eine Signalübertragung zur Ermittlung des Durchflusses findet statt, sobald die Sensorkontaktfläche des Durchflusskunststoffteils an die Sensorflächen im Sensorgehäuse großflächig anliegt. Dazu wird das Produkt in ein Schlauch- oder Kunststoffrohrsystem eingebaut, indem die Schläuche an den Anschlussbereichen befestigt werden. Anschließend wird die Vorrichtung mit einer der Druckbereichsflächen nach unten gerichtet in eine Sensormanschette oder das Sensorgehäuse eingelegt. Durch den zu schließenden Deckel des Sensorgehäuses oder der Sensormanschette oberhalb der zweiten Druckbereichsfläche erfährt das Durchflusskunststoffteil im mittig angeordneten Bereich eine Druckkraft. Diese Druckkraft sorgt für eine leichte Verformung des Kunststoffteils, bei der die Druckfläche in einer Abwärtsbewegung für eine seitliche Verschiebung der Sensorkontaktflächen in Richtung Messaufnehmer in der Sensormanschette sorgt. Durch das Produkt in Form eines Durchflusskunststoffteils wird die Messgenauigkeit erhöht, da keine weitere Verformung der sich daran anschließenden Rohre oder Schläuche, in denen das Messfluid strömt, notwendig ist. Darüber hinaus kann auf zusätzliche Mittel zur Kontaktherstellung zwischen Sensorkontaktflächen und den eigentlichen Sensoren weitestgehend verzichtet werden.

In diesem Zusammenhang wird mit dem Begriff "verformbar" das Material des mittig angeordneten Bereichs des Durchflusskunststoffteils näher definiert. In diesem Bereich ist das Material in der Weise verformbar, das durch den Druckgeber von Außen- z.B. der Deckel der Sensormanschette- eine Verformung des Bereichs erfolgt, so dass die Sensorkontaktflächen an den Messaufnehmern in der Sensormanschette anliegen. Die Sensorkontaktflächen müssen dabei nicht zu 100% am Messaufnehmer anliegen, aber eine für die Messung notwendige Mindestkontaktfläche zum Messaufnehmer aufweisen. Die Mindestkontaktfläche hängt dabei von der Art und Anordnung der Sensoren ab, für die das Durchflusskunststoffteil konzipiert ist. In der Regel wird jedoch eine Mindestkontaktierung erreicht, bei der auf zusätzliche Hilfsmittel, wie Kontaktgel, verzichtet werden kann. Die Verformung ist von geringem Ausmaß und um ein Vielfaches kleiner als bei den Clamp-On-Schlauchsystemen, bei denen die Schläuche in einen rechteckigen Querschnitt gepresst werden. Je nach gewähltem Kunststoffmaterial kann die Verformung jedoch auch eine elastische oder teilelastische Verformung sein. Die Verformung wird vorzugsweise durch mechanischen Druckaufbau, z.B. durch manuelles Schließen des Sensordeckels, hervorgerufen. Weitere Möglichkeiten einen Druck zur Verformung des Durchflusskunststoffteils sind abhängig von der Art und Form des anzubringenden Messaufnehmers. Neben einer mechanisch ausgeübten Druckkraft ist z.B. auch eine pneumatische Betätigung denkbar.

Unter dem Begriff "rechteckig" im Hinblick auf die Form des Holhkörpers im mittig angeordneten Bereich wird eine im wesentlichen rechteckige Form verstanden, die in den Ecken jedoch leichte Abschrägungen oder Rundungen aufweisen kann. Je nach Verformbarkeit und Auswahl des Kunststoffmaterials kann es daher zu leichten Abweichungen in der rechteckigen Form kommen. Die Grundform des mitig angeordneten Bereichs bleibt jedoch rechteckig oder sogar quadratisch.

Aufgrund von Toleranzen bei der Herstellung von Kunststoffteilen und bei der Herstellung von Sensorgehäusen oder -manschetten, d.h. aufgrund des damit verbundenen Abstands der Sensoren zueinander, kann es im Stand der Technik vorkommen, dass sich die Sensorkontaktflächen des Kunststoffteils und die Messaufnehmer in der Manschette nicht berühren. Bei der vorliegenden Erfindung kann durch die Verformbarkeit des Bauteils ein optimaler Kontakt zwischen Sensorkontaktflächen und den Sensoren und somit auch eine optimale Signalübertragung gewährleistet werden. Darüber hinaus kann auf weitere Hilfsmittel zur Signalübertragung, z.B. Kontaktgel, weitestgehend verzichtet werden, da diese unter anderem eine Verunreinigung des Sensorgehäuses bewirken und die Bedienung in der Folge unangenehmer und aufwendiger macht.

Um von einem runden Strömungsprofil in den angeschlossenen Kunststoffrohren oder Kunststoffschläuchen auf ein eckiges Strömungsprofil im mittig angeordneten Bereich der Vorrichtung zu kommen, geht in einer der Ausführungsformen der Innenquerschnitt in den Anschlussbereichen von einem runden in einen rechteckigen Querschnitt über. Die Strecke in den Anschlussbereichen ist geradlinig zum mittig angeordneten Bereich ausgeführt. Dadurch werden störende Strömungseinflüsse, z.B. Corioliskraft, und daraus resultierende Messungenauigkeiten vermieden.

Die Länge der Übergangsbereiche ist dabei abhängig vom Durchmesser der angeschlossenen Rohre oder Schläuche sowie der Größe und dem genauen Querschnitt des angestrebten Messbereichs im mittleren Teil. Dabei kann der Messbereich je nach Messprinzip und der Anordnung der einzelnen Sensoren variieren. Die Anschlussbereiche werden entsprechend dem verwendeten Messverfahren und der damit verbundenen Anzahl und Anordnung der Sensoren dimensioniert. Der Übergang vom runden in den eckigen Innenquerschnitt erfolgt in der Art, dass turbulente Strömungen oder ein Abreißen der Strömung des zu messenden Fluid vermieden werden.

In einer weiteren Ausführungsform des erfindungsgemäßen Produkts sind die Druckbereichsflächen und die Sensorkontaktflächen des mittig angeordneten Bereichs über Dünnstellen, vorzugsweise Filmscharniere bzw. Gelenke, oder über ein Mehrkomponentenkunststoffsystem miteinander verbunden sind.

Durch die Dünnstellen wird eine zusätzliche Flexibilität hinsichtlich der Verformbarkeit im mittig angeordneten Bereich der Vorrichtung erreicht. So kann bei der seitlichen Verschiebung der Sensorkontaktflächen ein unerwünschter Linseneffekt vermieden werden, d.h. der rechteckige Querschnitt bleibt trotz Komprimierung des mittig angeordneten Bereichs erhalten. Außerdem wird durch die Dünnstellen eine noch gezieltere Richtung der Verformung des Vorrichtungsmaterials vorgegeben. Hierzu bieten sich insbesondere Filmscharniere an, die als solche aus dem Bereich Kunststoffverpackungen, z.B. bei Seifenflaschen mit klappbarem Deckel, bekannt sind. Bei der vorliegenden Erfindung wurden die dadurch entstehende Flexibilität zur gerichteten Verformbarkeit des Kunststoffmaterials genutzt, um die passgenaue Verformung der Sensorkontaktflächen zum Sensor zu unterstützen. In Abhängigkeit vom gewählten Kunststoffmaterial werden als Dünnstellen sowohl Filmscharniere oder Gelenke als auch Systeme aus mehreren Kunststoffen verwendet. Bei den Mehrkomponentensystemen wird dazu an den gewünschten Dünnstellen ein gegenüber dem für die übrige Vorrichtung verwendeten Kunststoff vergleichsweise weiches Material verwendet.

In einer weiteren Ausführungsform des erfindungsgemäßen Produkts weisen die Sensorkontaktflächen ebene Außenflächen auf.

Durch die ebenen Außenflächen wird eine möglichst große Kontaktfläche zum Messaufnehmer mit den darin enthaltenen Sensoren ermöglicht. Die Auslegung der Flächen erfolgt in Abhängigkeit von der Messmethode und der damit verbundenen Anordnung der Sensoren. Ein Ultraschall-Durchflussmesser misst die Durchflussgeschwindigkeit im Messabschnitt mittels zweier sich gegenüber liegender Sensoren-Anordnungen. Die Sensoren sind in einem Winkel so zueinander angeordnet, dass ein Sensor etwas weiter stromabwärts montiert ist als der andere. Das Durchflusssignal wird durch abwechselndes Messen der Laufzeit eines akustischen Signals von einem Sensor zum anderen ermittelt, wobei der Effekt genutzt wird, dass Schall schneller mit der Durchflussrichtung übertragen wird als gegen die Durchflussrichtung. Der Volumenstrom wird dann durch sequentielles Messen zwischen allen Sensorpaaren in der Anordnung ermittelt.

Um die Messgenauigkeit weiter zu erhöhen, sind in einer der Ausführungsformen die Sensorkontaktflächen parallel zueinander angeordnet. Damit werden insbesondere für Clamp-On-Messsysteme die Sensorkontaktflächen so passgenau wie möglich auf die Sensoren im Messaufnehmer abgestimmt.

Die Druckbereichsflächen grenzen jeweils in etwa rechtwinklig an die Sensorkontaktflächen an und definieren zwei weitere Seiten des mittig angeordneten Bereichs der Vorrichtung. In einer der Ausführungsformen weisen die Druckbereichsflächen Profile als Kontaktflächen für ein sich darum durch Druck zu schließendes Durchflussmessgerät auf.

Die Profile dienen dazu eine gleichmäßige Druckverteilung zu gewährleisten. Darüber hinaus wird durch die Profile die Griffigkeit für den jeweiligen Druckgeber erhöht. Die Form der Profile hängt jedoch auch von der Fertigung des Kunststoffteils ab. So lässt sich eine Rippenstruktur besonders gut im Spritzgussverfahren herstellen. Gleichzeitig bietet die Rippenstruktur den Vorteil, dass der Druck über die lange Mittelrippe und die angrenzenden Querrippen optimal über die gesamte Fläche verteilt werden kann. Andere Ausgestaltungen der Profile sind jedoch ebenfalls ausführbar.

Wie bereits erwähnt, kann der auf die Druckbereichsflächen ausgeübte Druck mechanisch, z.B. durch manuelle Betätigung, oder pneumatisch erfolgen. Je nach Messaufnehmer und Handhabung derselben, sind die Profile an oder auf den Druckbereichsflächen der Vorrichtung platziert und ausgeformt.

In einer weiteren Ausführungsform des erfindungsgemäßen Produkts ist das Durchflusskunststoffteil aus bis zu drei Einzelbauteilen, umfassend den mittig angeordneten Bereich und die den mittig angeordneten Bereich flankierenden zwei Anschlussbereiche, zusammengesetzt.

Dadurch wird insbesondere die Flexibilität hinsichtlich des Einsatzes der Vorrichtung erhöht. Die Anschlussbereiche werden entsprechend den anzuschließenden Schläuchen oder Rohren dimensioniert und der mittig angeordnete Bereich kann je nach Messmethode entsprechend ausgetauscht werden, sofern auch hier der Durchmesser auf die Anschlussbereiche und den zu erwartenden Volumenstrom abgestimmt ist. In einer bevorzugten Ausführungsform ist die Querschnittsfläche des angeschlossenen Schlauches oder Kunststoffrohres gleich der Innenquerschnittsfläche des Durchflusskunststoffteils. Weiterhin erlaubt eine mehrteilige Ausbildung eine flexible Herstellung, da das Produkt so vorteilhaft durch das erfindungsgemäße Verfahren hergestellt werden kann. Darüber hinaus können bei einer mehrteiligen Ausführung des Durchflusskunststoffteils auch assymmetrische Formen umgesetzt werden. Dies ist z.B. von Vorteil, wenn man von einem großen auf einen kleinen Schlauchdurchmesser über die Laufstrecke des Bauteils wechseln will oder um mit der Form die Fließrichtung vorzugeben. Die einzelnen Bauteile können außerdem unterschiedlich farblich gestaltet werden, um z.B. die Handhabung beim Zusammenbau zu erleichtern.

Bei der Variante aus bis zu drei Einzelbauteilen sind diese thermisch, vorzugsweise durch Schweißverfahren oder Heißprägeverfahren, klebetechnisch, vorzugsweise durch Klebeverfahren oder Umspritzverfahren, oder mechanisch, vorzugsweise durch Verschrauben oder Verklemmen miteinander verbunden.

Die zuvor mit der mehrteiligen Bauweise beschriebenen Vorteile bedingen ein passgenaues Zusammenfügen der Einzelteile zu dem endgültigen Produkt. Hierzu haben sich verschiedene Verfahren bewährt, die sich je nach gewähltem Kunststoff in thermische, klebetechnische oder mechanische Verbindungsverfahren untergliedern lassen. Bei den thermischen Verfahren werden vor allem die klassischen Kunststoffschweißverfahren, d.h. Heizelementschweißen, Ultraschallschweißen, Laserschweißen, Induktionsschweißen oder Vibrationsschweißen angewendet. Bei den genannten Schweißverfahren handelt es sich um stoffschlüssige Fügeverfahren, bei denen der Kunststoff plastifiziert wird. Für die Schweißverfahren eignen sich dafür ausschließlich Thermoplaste, da nur diese eine Schmelze bilden können. Beim Heizelementschweißen werden die Einzelteile an den Kontaktstellen separat voneinander mittels Heizelementen angeschmolzen und anschließend zusammengeklebt. Dadurch wird eine sehr feste und zugleich hermetisch dichte Verbindung hergestellt, die frei von zusätzlichen Verbindungsmitteln, wie z.B. Klebern, ist. Zusätzliche Klebemittel sind in diesem Zusammenhang oft unerwünscht, da sich diese im späteren Betrieb zersetzen können und Bestandteile ggf. in die Vorrichtung hinein diffundieren können und so möglicherweise das Produkt verunreinigen. Nichtsdestotrotz bieten auch Klebeverfahren je nach Kunststoff Vorteile, z.B. wenn der Kunststoff keiner thermischen Belastung standhält. Bei den Umspritzverfahren wird genau wie bei den Klebverfahren zusätzliches Material eingebracht und die Einzelbauteile entweder mit dem gleichen Kunststoff oder aber mit einem von dem eigentlichen Vorrichtungsmaterial abweichenden Material an den entsprechenden Verbindungsstellen umspritzt bzw. ummantelt. Bei der mechanischen Verbindung sind an den Einzelbauteilen Schraubgewinde, Kupplungsstücke o.ä. vorgesehen. Ein einfaches Zusammenstecken und eine zusätzliche Fixierung mithilfe von Schlauchbindern sind ebenfalls möglich.

In einer weiteren Varianten des Produkts ist das Durchflusskunststoffteil, vor dem Ausbilden des Kanals, im Spritzgussverfahren, vorzugsweise Mehrkomponenten-Spritzgussverfahren, durch Extrusion, durch mechanische Bearbeitung eines Kunststoffrohling, vorzugsweise durch Drehen und/oder Fräsen, oder durch ein Prototypingverfahren, ausgewählt aus der Gruppe von Vakuumdruckgussverfahren, 3D-Druckverfahren, Lasersintern oder Stereolithographie, hergestellt.

Auch hier hängt die Wahl des Verfahrens im Wesentlichen von der Wahl des verwendeten Kunststoffes ab, da nicht jeder Kunststoff gleichermaßen für jedes Fertigungsverfahren geeignet ist. Die Wahl des Kunststoffes wiederum hängt stark von der Anwendung ab. Hier spielen die individuellen Belastungsparameter durch Druck, Temperatur, mechanische Beanspruchung, Medienbeständigkeit, Sterilisierbarkeit sowie die Eignung für bestimmte Anwendungen z.B. im pharmazeutischen oder medizinischen Bereich, eine entscheidende Rolle.

In einer besonderen Variante wird das Durchflusskunststoffteil aus einem Thermoplast, ausgewählt aus der Gruppe von Polyethylen (PE), High Density Polyethylen (HDPE), Polypropylen (PP), Polyvinylchlorid (PVC), Polycarbonat (PC), Copolyester , Acrylstyrolbutadiencopoloymer (ABS) oder Styrolacrynitril (SAN); einem Elastomer, ausgewählt aus der Gruppe von Ethylen-Propylen-Dien-Monomer (EPDM) und Flüssigsilikon (LSR); einem thermoplastischen Elastomer (TPE), vorzugsweise auf Urethanbasis oder als Styrol-Blockcopolymer; einem Mehrkomponentenkunststoff, ausgewählt aus einer Mischung aus Polyethylen (PE) und Polypropylen (PP), Polypropylen (PP) und einem thermoplastischen Elastomer, Polycarbonat und einem thermoplastischen Elastomer, und Acrylstyrolbutadiencopoloymer (ABS) und Polypropylen (PP), hergestellt.

Wie bereits zuvor beschrieben, ist die Auswahl des Kunststoffes sowohl von der gewünschten Anwendung der Vorrichtung als auch von den Kosten für ihr Herstellungsverfahren abhängig. In einer speziellen Ausführungsform ist die Vorrichtung als Einwegartikel gedacht, so dass für solche Anwendungen schon aus Kostengründen die bekannten Thermoplaste Polyethylen oder Polypropylen verwendet werden. Bei den Mehrkomponentenkunststoffen lassen sich verschiedene Materialeigenschaften miteinander kombinieren, z.B. lässt sich eine Steigerung in der Verformbarkeit durch Kombination mit einem thermoplastischen Elastomer erreichen. In einer weitere Ausführungsform hält das Produkt einem Betriebsdruck = 6 bar, vorzugsweise = 5 bar, und einem Sicherheitsdruck = 7 bar, vorzugsweise = 8 bar, stand.

Der Betriebsdruck hat damit ebenfalls Einfluss auf die Dimensionierung der gesamten Vorrichtung. In Abhängigkeit vom Betriebsdruck, aber auch der Betriebstemperatur, der Dauer der Belastung (Betriebsdauer) und den spezifischen Materialeigenschaften wird somit die spezifische Auslegung der Vorrichtung vorgenommen. Die Auslegung der Vorrichtung ist darüber hinaus von dem zu messenden Fluid und dessen spezifischen Eigenschaften anhängig. Hierbei kann es sich um reine Flüssigkeiten, um Flüssigkeiten mit Gaseinschlüssen, d.h. gelösten Gasen oder Gasblasen, aber auch um Flüssig-Feststoff-Systeme, z.B. Kieselgurfilterpartikel in einem Trägerfluid, handeln.

Wie bereits oben erwähnt ist das Produkt daher so ausgelegt, dass sie einer Temperatur von etwa 5 bis 50°C, vorzugsweise etwa 10 bis 37°C, besonders bevorzugt etwa 15 bis 25°C, standhält.

Diese Temperaturbereiche sind zum einem mit der Verwendung von Kunststoff kompatibel und zum anderen auf die Anwendungen der Vorrichtung, insbesondere im biopharmazeutischen, lebensmitteltechnologischen oder chemischen Bereich, abgestimmt. Bei der Produktion von Biopharmazeutika hängt der Temperaturbereich von den kultivierten Organismen und deren Temperaturprofil sowie den biochemischen Produkten, z.B. Proteinen und deren Temperaturprofil, ab. Dementsprechend ist die Vorrichtung auf diese Temperaturprofile abgestimmt.

In einer weiteren Variante des Produkts sind die Anschlussbereiche auf Schlauch- und/oder Kunststoffrohrinnendurchmesser von 1/8" bis 2", vorzugsweise 1/4" bis 1", abgestimmt. Für Rohr- und Schlauchdurchmesser ist die Maßeinheit" für den Fachmann nach wie vor gebräuchlich. 1 " (Zoll) entspricht dabei 1 in (inch) was wiederrum 25,4 mm entspricht. Dies sind auch die gängigen Schlauch- und Kunststoffrohrdurchmesser, die als Einwegartikel (single use) in der pharmazeutischen, chemischen oder lebensmitteltechnologischen Industrie sowie in technischen Laboratorien verwendet werden.

In einer weiteren Variante des Produkts ist diese daher ein Einwegartikel. Aufgrund der hohen Sterilitätsanforderungen sind sogenannte "single use"-Produkte zur Produktion insbesondere im Pharmabereich, in der Medizin, aber auch im Lebensmittelbereich immer häufiger anzutreffen. Mit dem hier beschriebenen Produkt wird ein weiterer Baustein für einen automatisierten Produktionsprozess im Einwegsystem bereitgestellt. Um die Kontaminierung zu minimieren oder sogar komplett auszuschließen, ist das vorliegende Produkt nicht nur für den Einbau vor Ort gedacht, sondern findet insbesondere als Baustein in einem geschlossenen Einweg-Fluidsystem Anwendung. Zum Beispiel lässt sich das Produkt zur Durchflussmessung an einen Einweg-Bioreaktor montieren, aus dem nach der Fermentation das Kulturmedium samt dem Zielprodukt in einen anderen Behälter zur weiteren Lagerung oder Aufarbeitung überführt wird. Das über Sterilmembranen an den Zu- und Abläufen verbundene Gesamtfluidsystem wird verpackt, sterilisiert und das Produkt somit als Bestandteil des Gesamtpaketes an die Endnutzer ausgeliefert. Nach der Produktion kann das komplette Paket entsprechend entsorgt werden.

Die Anwendungen sind wie bereits dargestellt sehr vielfältig und richten sich in der Regel nach dem angesprochenen Industriezweig. Das Produkt kann daher in Schlauch- und/oder Kunststoffrohrsystemen, vorzugsweise Fluidsystemen, besonders bevorzugt Flüssigkeitssysteme, zur Durchflussmessung bei automatisierten industriellen oder labortechnischen Prozessen; vorzugsweise medizinischen, biotechnologischen oder lebensmitteltechnologischen, Prozessen verwendet werden. Im Folgenden wird ein Verfahren zur Durchflussmessung beschrieben, das durch die folgenden Verfahrensschritte gekennzeichnet ist:
a) Bereitstellen einer Vorrichtung aufweisend ein Durchflusskunststoffteil als Hohlkörper mit einem mittig angeordneten und verformbaren Bereich mit rechteckigem Querschnitt, wobei an der Außenfläche des mittig angeordneten Bereichs zwei gegenüberliegende Sensorkontaktflächen und zwei gegenüberliegende Druckbereichsflächen angeordnet sind, und wobei zwei Anschlussbereiche den mittig angeordneten Bereich flankieren,
b) Verbinden der Vorrichtung aus Schritt a) mit einem Schlauch- und/oder Kunststoffrohrsystem sowie damit verbundenen Vorratsgefäßen über die Anschlussbereiche zu einem geschlossenen System,
c) Einbringen des mittig angeordneten Bereichs in ein Durchflussmessgerät aufweisend einen Messaufnehmer mit mindestens einem Sensorpaar und einem Deckel zum Festklemmen des Durchflussmessgerätes, wobei das Durchflusskunststoffteil mit den Sensorkontaktflächen so in dem Durchflussmessgerät angeordnet wird, dass mindestens ein Sensorpaar den Sensorkontaktflächen des Durchflusskunststoffteils zugewandt und der Deckel über einem der Druckbereichsflächen liegt,
d) Anpressen der Sensorkontaktflächen in Richtung Sensorpaar des Durchflussmessgerätes durch Verformung des Durchflusskunststoffteils mittels manuellem Andrücken des Deckels über der Druckbereichsfläche und
e) Anschließen des Durchflussmessgerätes an einen Messumformer mit Auswertungseinheit und Durchführen der Durchflussmessung.

Mit dem vorliegenden Verfahren ist es erstmals möglich, eine präzise Durchflussmessung in Schlauch- und Kunststoffrohrsystemen vorzunehmen, ohne dass die Schläuche oder Rohre direkt für die Messung verformt werden müssen und dadurch einen erhöhten Kalibrierungsaufwand erzeugen. Bei dem vorliegenden Verfahren ist jedoch keine nachträgliche Kalibrierung notwendig, da durch den Einsatz des Durchflusskunststoffformteils ein definierter Messbereich entsteht. Die Messergebnisse werden dadurch reproduzierbar und die Messung als solche präziser, da die zuvor beschriebene Vorrichtung zu einer genauen Geometrie und Materialverteilung im Messbereich führt. Dazu wird in Schritt a) die zuvor beschriebene Vorrichtung bereitgestellt. Diese wird in Schritt b) über die Anschlussbereiche an die Schlauch- oder Kunststoffrohrsysteme angeschlossen. Unter "Anschließen" wird dabei jegliche Art der Verbindung aus der erfindungsgemäßen Vorrichtung und den Schläuchen oder Rohren verstanden. Die Schläuche können z.B. auf die Anschlussbereiche aufgeschoben und mit Schlauchbindern fixiert werden. Bei Kunststoffrohren ließen sich auch Schraubgewinde, Kupplungen oder Anschlussklemmen vorsehen, über die eine Verbindung generiert wird. Im Schritt c) erfolgt die eigentliche Messanordnung aus der Vorrichtung, die von einem Durchflussmessgerät umschlossen wird, indem das Durchflussmessgerät einen Deckel aufweist, der mit, z.B. manuellem Druck, über den Druckbereichsflächen geschlossen wird. Durch das Schließen des Deckels in Schritt d) werden die Sensorkontaktflächen nach außen gedrückt und somit in Richtung der Sensoren, die sich im Messaufnehmer befinden, bewegt. Durch diese einfache Handhabung ist in der Regel kein weiteres Kontaktierungshilfsmittel, z.B. Kontaktgel, notwendig, wodurch sich auch der Reinigungsaufwand erübrigt. Anschließend kann das Durchflussmessgerät an einen Messumformer mit Auswertungseinheit zum Durchführen der Durchflussmessung angeschlossen werden (Schritt e).

In einer Ausführungsform des Verfahrens erfolgt zwischen Schritt b) und c) eine Sterilisation, ausgewählt aus der Gruppe von Strahlensterilisation, vorzugsweise Gammastrahlensterilisation oder Elektronenstrahlensterilisation, Heißdampfsterilisation und Gassterilisation, des in Schritt b) hergestellten, geschlossenen Systems.

Die Art der Sterilisation ist dabei von dem angeschlossenen Gesamtsystem und den auf der Anwendungsseite gewünschten Grad der Sterilisation abhängig. Bei den zuvor beschriebenen Einweg-Komplett-Lösungen wird das Gesamtpaket aus Sterilbehältern, Schläuchen oder Rohren und Durchflussmessvorrichtung verpackt und anschließend nach einem der genannten Verfahren, z.B. mittels Gammasterilisation, sterilisiert.

Die eigentliche Durchflussmessung erfolgt in einer bevorzugten Ausführungsform des Verfahrens als Volumendurchflussmessung, vorzugsweise Ultraschalldurchflussmessung (USD) oder Magnetisch-induktive Durchflussmessung (MID).

Ultraschall-Durchflussmesser (USD) messen die Geschwindigkeit des strömenden Mediums mit Hilfe akustischer Wellen und bestehen aus zwei Teilen: dem eigentlichen Messaufnehmer (Ultraschallsensor) sowie einem Auswerte- und Speiseteil (Transmitter oder Messumformer). Als akustisches Messverfahren bietet es gegenüber anderen Messverfahren einige Vorteile. Die Messung ist weitgehend unabhängig von den Eigenschaften der verwendeten Medien wie elektrische Leitfähigkeit, Dichte, Temperatur und Viskosität. Das Fehlen bewegter mechanischer Teile verringert den Wartungsaufwand und ein Druckverlust durch Querschnittsverengung entsteht nicht. Ein großer Messbereich zählt zu den weiteren positiven Eigenschaften dieses Verfahrens.

Ein weiteres berührungsloses Messprinzip ist die magnetisch-induktive Durchflussmessung (MID). Das Messprinzip dieser Durchflussmesser nutzt die Trennung bewegter Ladungen in einem Magnetfeld. Durch das Rohr oder den Schlauch strömt die zu messende Flüssigkeit, die eine Mindestleitfähigkeit aufweisen muss. Von außen wird mittels Spulen ein senkrecht zur Flussrichtung orientiertes Magnetfeld aufgebracht. Die in der leitfähigen Flüssigkeit vorhandenen Ladungsträger, Ionen oder geladene Teilchen, werden durch das Magnetfeld abgelenkt. An den senkrecht zum Magnetfeld angeordneten Messelektroden entsteht durch die Ladungstrennung eine Spannung, die mit Auswertungseinheit erfasst wird. Die Höhe der gemessenen Spannung ist proportional der Strömungsgeschwindigkeit der Ladungsträger, d.h. zu deren Fließgeschwindigkeit.

Im Folgenden werden Ausführungsbeispiele der vorliegenden Erfindung anhand der Figuren im Detail beschrieben. Die Ausführungsbeispiele sind nicht als einschränkend zu sehen, sondern dienen der Veranschaulichung der vorliegenden Erfindung. Weitere Ausführungsformen sind im Rahmen der Ansprüche denkbar.
- **Fig. 1**: zeigt ein Ausführungsbeispiel des Vorförmlings.
- **Fig. 2**: zeigt ein erstes Ausführungsbeispiel des Kanalausbildungselements.
- **Fig. 3**: zeigt ein zweites Ausführungsbeispiel des Kanalausbildungselements.
- **Fig. 4**: zeigt ein Ausführungsbeispiel der Pressvorrichtung.
- **Fig. 5**: zeigt den Vorgang, wie das Kanalausbildungselement in den Vorförmling eingepresst wird.
- **Fig. 6**: zeigt den verschweißten Zustand zweier Vorförmlinge mit einem durchgehenden Kanal.
- **Fig. 7**: zeigt ein dem Verständnis förderliches Beispiel eines Produkts
- **Fig. 8**: zeigt den mittig angeordneten Bereich des Beispiels des Produkts in einer perspektivischen Ansicht.
- **Fig. 9**: zeigt den mittig angeordneten Bereich des Beispiels des Produkts in einer Schnittansicht.
- **Fig. 10**: zeigt das Beispiel des Produkts samt angeschlossenen Schläuchen und Messaufnehmer.
- **Fig. 11**: zeigt das Beispiel des Produkts in einer Schnittansicht.
- **Fig. 12**: zeigt ein weiteres Beispiel des Produkts in einer Schnittansicht.

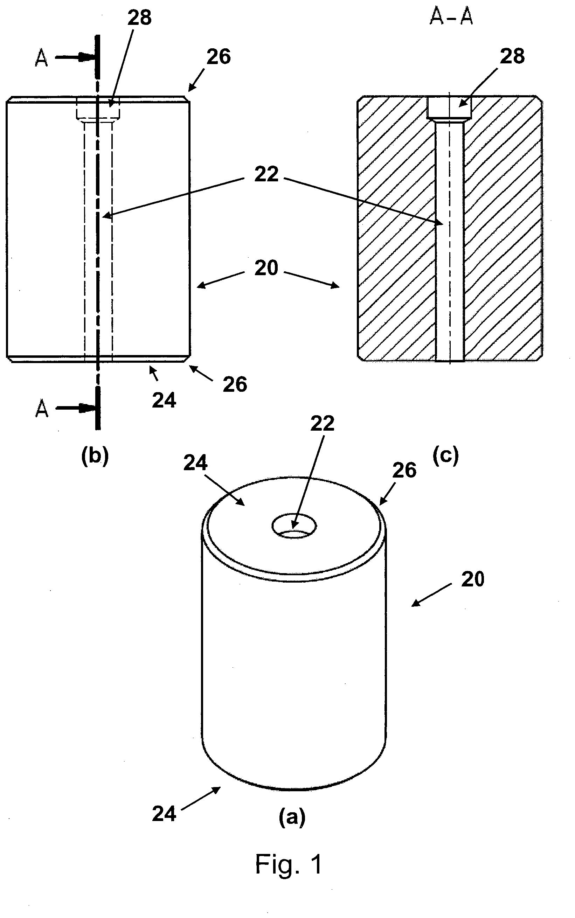

Fig. 1(a) zeigt ein Ausführungsbeispiel eines Vorförmlings 20, wie er in dem Verfahren gemäß einer Ausführungsform der Erfindung verwendet werden kann, in einer perspektivischen Ansicht. Der Vorförmling 20 weist eine im Wesentlichen zylindrische Form auf, und kann aus einem thermoplastischen Kunststoff, wie beispielsweise PE-HWST, hergestellt sein. Der Vorförmling 20 weist eine im Wesentlichen zylindrische Bohrung 22 auf, welche sich in Längsrichtung des Vorförmlings 20 mittig durch den Vorförmling 20 erstreckt. Die Endflächen 24 sind im Wesentlichen plan und können eine Fase 26 aufweisen.

Fig. 1(b) zeigt den Vorförmling 20 in einer Seitenansicht, und Fig. 1(c) zeigt den Vorförmling 20 in einer Schnittansicht, geschnitten entlang der Linie A-A in Fig. 1(b). An einem der Endbereiche des Vorförmlings 20 weist die zylindrische Bohrung 22 einen aufgeweiteten Bereich mit einem größeren Durchmesser auf, welcher als Reservoir 28 bezeichnet werden kann. Das Reservoir 28 kann überschüssiges aufgeschmolzenes Material aufnehmen, welches von dem Kanalausbildungselement entlang der Bohrung 22 verdrängt wird, wenn das Kanalausbildungselement von der gegenüberliegenden Seite des Vorförmlings 20 her in die Bohrung 22 hineinbewegt wird. Der Abschnitt des Vorförmlings 20, in dem das Reservoir 28 ausgebildet ist, kann nach dem Ausbilden des Kanals abgetrennt werden.

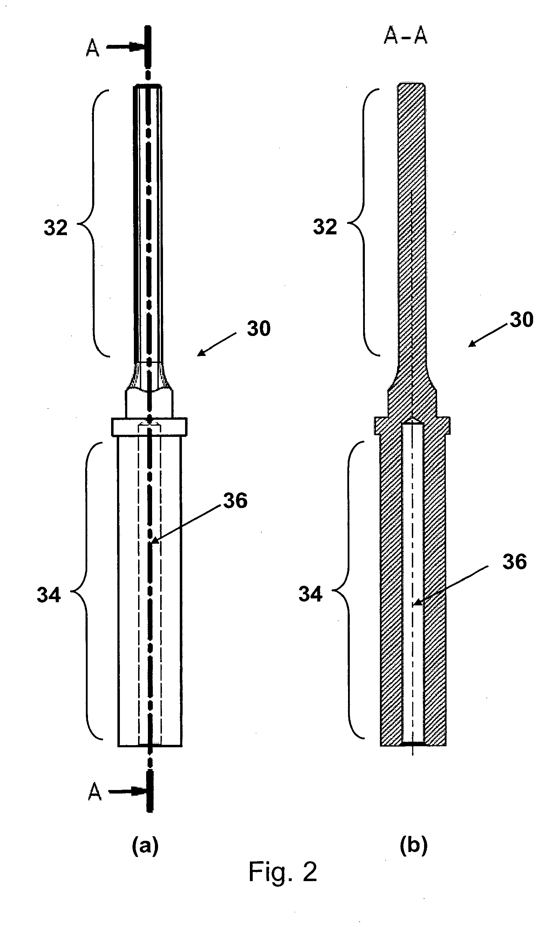

Fig. 2(a) zeigt ein erstes Ausführungsbeispiel des Kanalausbildungselements 30 in einer Seitenansicht. Das Kanalausbildungselement 30 ist als Dorn, insbesondere als Heizdorn ausgebildet. Der vordere Bereich des Kanalausbildungselements 30 gemäß des ersten Ausführungsbeispiels, also der Einführbereich 32, weist einen über die Länge konstanten Querschnitt auf. Der Querschnitt ist ein rechteckiger, insbesondere quadratischer, Querschnitt, wobei die Ecken abgefast sind. Der hintere Bereich des Kanalausbildungselements 30 weist einen zylindrisch ausgebildeten Einspannbereich 34 auf.

Fig. 2(b) zeigt das Kanalausbildungselement 30 gemäß des ersten Ausführungsbeispiels in einer Schnittansicht, geschnitten entlang der Linie A-A in Fig. 2(a). Der Einspannbereich 34 weist eine, vorzugsweise zylindrische, Bohrung oder Ausnehmung 36 auf. In diese Ausnehmung 36 kann eine Heizvorrichtung und/oder eine Kühlvorrichtung zum Heizen und/oder Kühlen des Kanalausbildungselements 30 angeordnet werden. Bei der Heiz- und/oder Kühlvorrichtung kann es sich um Heiz- und/oder Kühlbatterien oder Heiz- und/oder Kühlungsstäbe handeln. Denkbar ist alternativ oder zusätzlich auch eine Erhitzung und/oder Kühlung des Kanalausbildungselements mittels eines das Kanalausbildungselement durch- und/oder umströmenden Fluids (z.B. gekühlte und/oder heiße Luft). Ferner kann das Kanalausbildungselement mittels eines IR-Strahlers und/oder eines sonstigen, außen anbringbaren Heizelements auf eine geeignete Temperatur erhitzt werden.

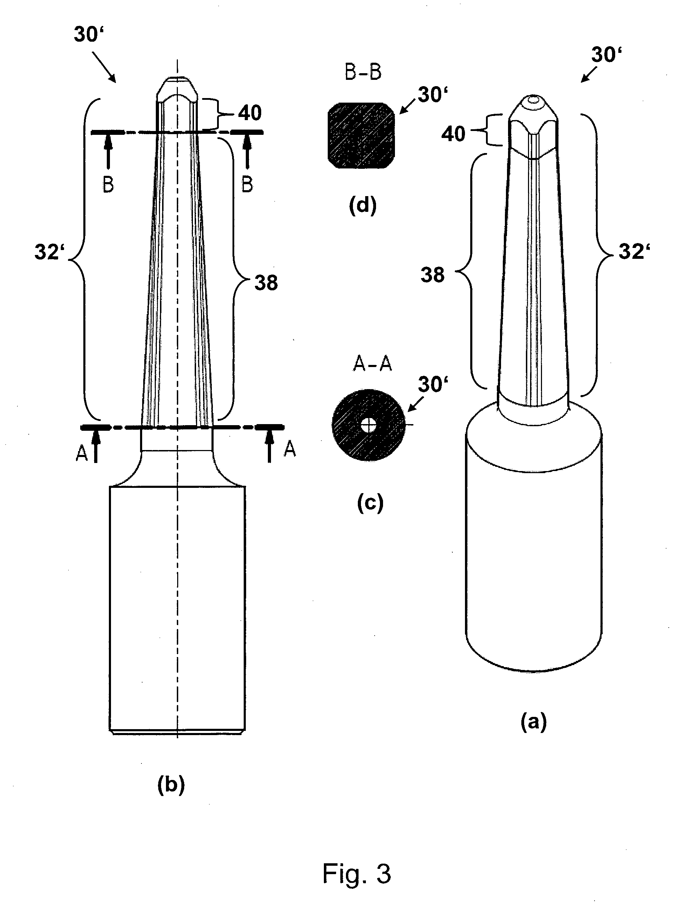

Fig. 3(a) zeigt ein zweites Ausführungsbeispiel des Kanalausbildungselements 30' in einer perspektivischen Ansicht, und Fig. 3(b) zeigt das zweite Ausführungsbeispiel des Kanalausbildungselements 30' in einer Seitenansicht. Anders als beim ersten Ausführungsbeispiel weist der vordere Bereich des Kanalausbildungselements 30', also der Einführbereich 32, einen Querschnittsveränderungsbereich 38 und einen Querschnittskonstantbereich 40 auf.

Fig. 3(c) und Fig. 3(d) zeigen jeweils das Kanalausbildungselement 30' in einer Schnittansicht, einmal geschnitten entlang der Linie A-A in Fig. 3(b) und einmal geschnitten entlang der Linie B-B in Fig. 3(b). Der Querschnitt verändert sich über die Länge des Querschnittsveränderungsbereichs 38 von der Basis zur Spitze des Kanalausbildungselements 30' hin von einem runden Querschnitt (Fig. 3(c)) kontinuierlich zu einem quadratischen Querschnitt (Fig. 3(d)). Dieser quadratische Querschnitt kann dem quadratischen Querschnitt mit den abgefasten Ecken des Kanalausbildungselements gemäß des ersten Ausführungsbeispiels entsprechen. Die Veränderung des Querschnitts über die Länge des Querschnittsveränderungsbereichs 38 kann gleichmäßig verlaufen. In dem Endbereich des Kanalausbildungselements 30', dem Querschnittskonstantbereich 40, behält das Kanalausbildungselement 30' den quadratischen Querschnitt bis nahe der Spitze bei. In anderen Worten ist der Querschnitt in diesem Bereich konstant. Zur endgültigen Spitze des Kanalausbildungselements 30' hin ist dann eine letzte Zuspitzung ausgebildet.

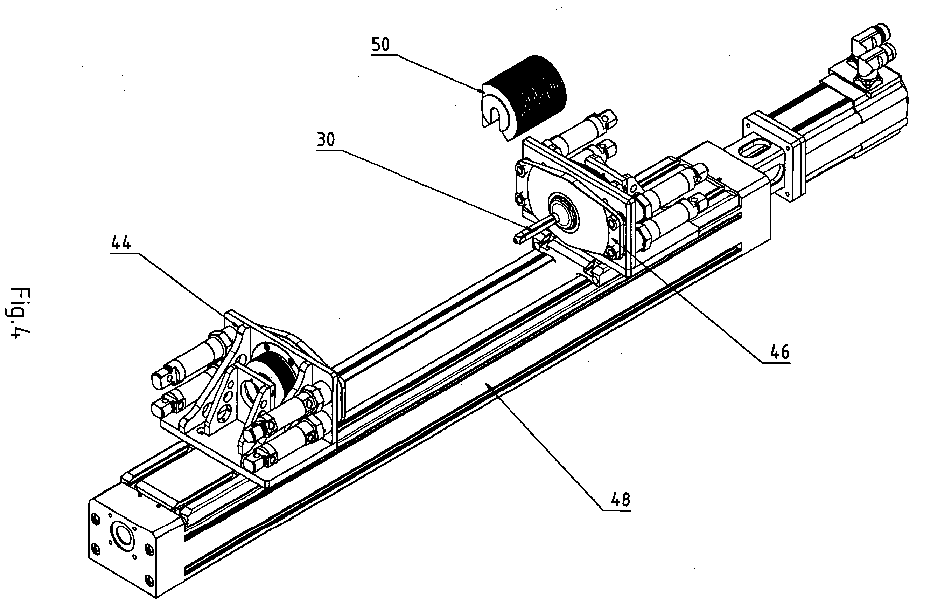

Fig. 4 zeigt ein Ausführungsbeispiel der Pressvorrichtung 42 in einer perspektivischen Ansicht. Die Pressvorrichtung 42 weist eine Werkstückaufnahme 44 und eine Einspannvorrichtung 46 auf. In der Werkstückaufnahme 44 wird der Vorförmling eingespannt, und in der Einspannvorrichtung 46 wird das Kanalausbildungselement an seinem Einspannbereich eingespannt. Hierbei werden der Vorförmling, insbesondere die Ausnehmung des Vorförmlings, und das Kanalausbildungselement, insbesondere der Einführbereich des Kanalausbildungselements, koaxial miteinander bzw. zueinander ausgerichtet. Werkstückaufnahme 44 und Einspannvorrichtung 46 sind jeweils auf Schlitten auf gemeinsamen Schienen 48 angeordnet, und können linear gegeneinander verfahren werden. Die Pressvorrichtung weist eine absenkbare Kuppel 50 auf, welche das Kanalausbildungselement zumindest teilweise umschließen kann. In der zurückgefahrenen Position der Einspannvorrichtung 46, d.h. wenn das Kanalausbildungselement frei in den Raum hervorsteht, kann die Kuppel 50 einen Wärmeverlust des beheizten Kanalausbildungselements verhindern. Alternativ oder zusätzlich kann die Kuppel 50 eine Heizvorrichtung beinhalten.

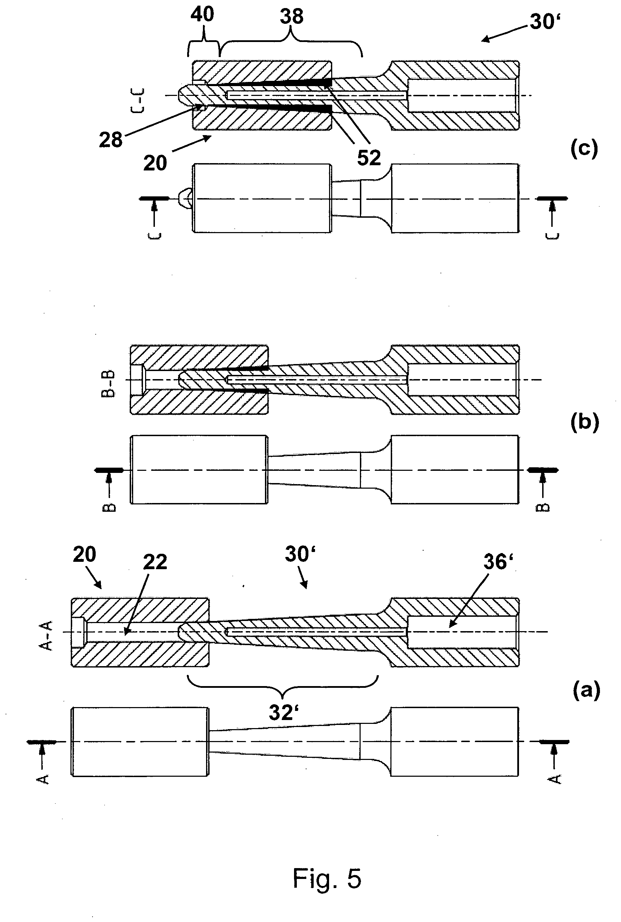

Fig. 5(a), Fig. 5(b) und Fig. 5(c) zeigen den Vorgang, wie das Kanalausbildungselement 30' in den Vorförmling 20 eingepresst wird. Das gezeigte Kanalausbildungselement 30' entspricht dem Kanalausbildungselement 30' gemäß des zweiten Ausführungsbeispiels. Die Ausnehmung 36' des Kanalausbildungselements 30' gemäß des zweiten Ausführungsbeispiels erstreckt sich tief in den dornförmigen Bereich bzw. Einführbereich 32' hinein, wodurch ein besseres Erhitzen und/oder Kühlen des Kanalausbildungselements 30' mittels einer Heiz- und/oder Kühlvorrichtung ermöglicht wird. Ferner können Temperaturfühler entlang der nahezu gesamten Länge des Kanalausbildungselements 30' angeordnet werden, um so die Temperaturverteilung im Kanalausbildungselement 30', insbesondere während des Einpressens in den Vorförmling 20, zu erfassen.

Die Endposition beim Hineinbewegen bzw. Einpressen des Kanalausbildungselements 30' ist in Fig. 5(c) gezeigt. Das durch das Kanalausbildungselement 30' aufgeschmolzene und verdrängte Material 52 des Vorförmlings 20 ist dunkel angedeutet. Dieses verdrängte Material 52 wird zumindest teilweise in das Reservoir 28 verdrängt, was jedoch nicht angedeutet ist. Das Kanalausbildungselement 30' wird soweit in den Vorförmling 20 hineingepresst, dass die Spitze davon auf der anderen Seite des Vorförmlings 20 wieder heraustritt. Zumindest ein Teil des Querschnittkonstantbereichs 40 verbleibt im Inneren des Vorförmlings 20.

Im Folgenden wird ein Verfahren zum Ausbilden des Kanals anhand der Figuren 4 und 5 beispielhaft beschrieben.

Als Vorförmling 20 dient ein zylindrisch geformtes Kunststoffteil aus HDPE mit einer in Längsrichtung mittig angeordneten zylindrischen Bohrung 22 von 10,6 mm Durchmesser. Die Endflächen 24 sind plan und weisen eine Fase 26 auf. Vor dem Ausformen des eigentlichen Kanals werden das Kanalausbildungselement 30 und umgebende Komponenten der Pressvorrichtung 42 ca. 30 min vorgeheizt, so dass das Kanalausbildungselement gleichmäßig temperiert ist. Die Kuppel 50 zur Abdeckung des Kanalausbildungselements 30 ist während der Aufwärmphase der gesamten Vorrichtung sowie anschließend bei jeder Aufwärmphase vor dem Ausformen des Kanals über das Kanalausbildungselement 30 abgesenkt, um es gleichmäßig zu erwärmen. Nach der Aufwärmphase wird der eigentliche Prozess der Kanalausformung gestartet.

Dazu wird der Vorförmling 20 in die Vorrichtung zur Werkstückaufnahme 44 auf der einen Seite der Pressvorrichtung 42 eingesetzt und mithilfe einer Spannzange festgesetzt. Die Kuppel 50 über dem Kanalausbildungselement 30 wird aus dem Fertigungsbereich herausgehoben. Sowohl das Kanalausbildungselement 30 als auch der Vorförmling 20 sind auf zwei gegenüberliegenden Schlitten auf der Schiene 48 angeordnet, die nun aufeinander zu bewegt werden. Der Einführbereich 32 des Kanalausbildungselements 30 taucht dabei mit einer Geschwindigkeit von ca. 8 mm/s in den Vorförmling 20 ein. Sobald das Kanalausbildungselement 30 seine Endposition innerhalb des Vorförmlings 20 erreicht hat, wird die Heizung zum Erwärmen des Kanalausbildungselementes 30 deaktiviert und das Kanalausbildungselement 30 für 50 s in der Position gehalten. Anschließend wird das Kanalausbildungselement 30 mit einer Geschwindigkeit von ca. 5 mm/s aus dem Vorförmling 20 heraus gezogen. Die Schlitten fahren nun in Ihre Ausgangsposition zurück. Während das Kanalausbildungselement für die Ausformung des nächsten Bauteils über die Dauer von 85 s vorgeheizt wird, wird die Spannzange zur Aufnahme des Vorförmlings 20 freigegeben und das fertige Bauteil entfernt, so dass der nächste Vorförmling 20 eingesetzt werden kann. Die Aufheizzeit des Kanalausbildungselements 30 zwischen der Fertigung von zwei fertigen Vorförmlingen 20 mit Kanal kann zwischen 2 und 2,5 min betragen, vorzugsweise 2 min 15 sec. Der Ausgebildete Kanal kann beispielsweise eine Länge von zwischen 30 und 50 mm aufweisen, vorzugsweise 41 mm.

Der Vorförmlinge 20 wird anschließend je nach Verwendungszweck zur Formung der Außenkontur und der Gesamtlänge mechanisch bearbeitet.

Die Oberflächenrauigkeit des ausgeformten Innenkanals wurde mit einem Perthomether der Firma Zeiss gemäß DIN EN ISO 4287 gemessen, und es wurde ein Wert von Ra 0,139 µm gemessen. Es sind jedoch auch Oberflächenrauhigkeiten von Ra ≤ 0,139 µm erzielbar. Für die Messung wurde der Vorförmling 20 längs entlang des ausgebildeten Kanals aufgeschnitten.

Die Kanalausformungen für die Schlauchtüllen 7, 8, die das Bauteil zur Durchflussmessung flankieren, werden nach dem gleichen Verfahren gefertigt. Während der Kanal des Mittelteils über die gesamte Länge gleich bleibt, findet bei den Schlauchtüllen ein Übergang von rund auf eckig statt. Diese Konturen werden durch ein Kanalausbildungselement 30 mit einem sich zur Spitze hin verjüngenden Querschnitt realisiert.

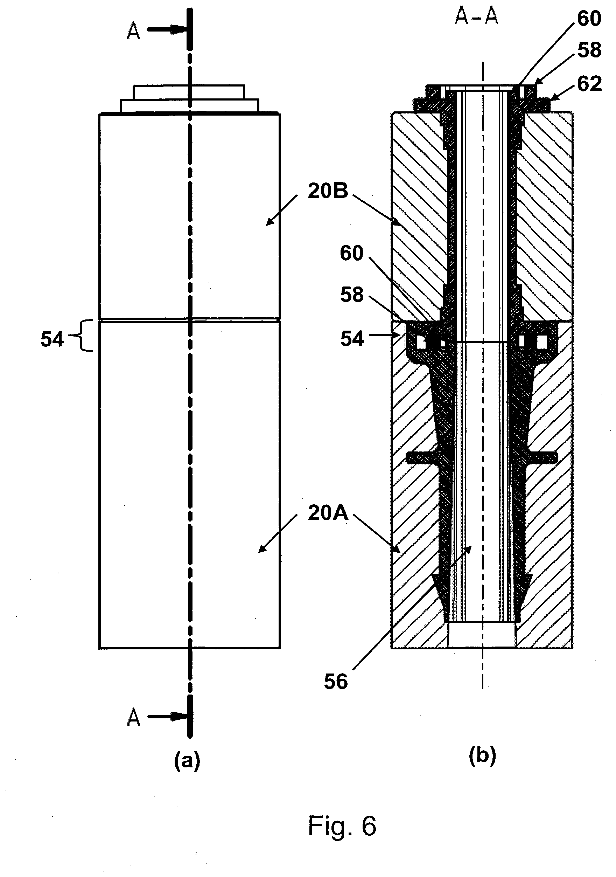

Fig. 6(a) zeigt den verschweißten Zustand zweier Vorförmlinge 20A, 20B mit einem durchgehenden Kanal in einer Seitenansicht. Der verschweißte Bereich ist in Fig. 6(a), wegen des außenliegenden Flanschs des Vorförmlings 20A, welcher als Sichtschutz dient, nicht sichtbar.

Fig. 6(b) zeigt den verschweißten Zustand der zwei Vorförmlinge 20A, 20B mit dem durchgehenden Kanal 56 in einer Schnittansicht, geschnitten entlang der Linie A-A in Fig. 6(a). Der Vorförmling 20A entspricht einem Vorförmling, dessen Kanalabschnitt durch das Kanalausbildungselement gemäß des zweiten Ausführungsbeispiels ausgebildet wurde. Daher weist der Kanal 56 im Bereich des Vorförmlings 20A einen Querschnitt auf, der zunächst rund ist und sich in Richtung zum Vorförmling 20B hin kontinuierlich zu einem quadratischen Querschnitt mit abgefasten Ecken ändert. Der Vorförmling 20B entspricht einem Vorförmling, dessen Kanalabschnitt durch das Kanalausbildungselement gemäß des ersten Ausführungsbeispiels ausgebildet wurde. Daher weist der Kanal 56 im Bereich des Vorförmlings 20B einen konstanten, quadratischen Querschnitt mit abgefasten Ecken auf. Das aus den verschweißten Vorförmlingen auszubildende Produkt ist dunkel angedeutet. Dieses kann aus den Vorförmlingen beispielsweise gedreht oder gefräst werden. Hierbei entspricht der Teil des Produkts des Vorförmlings 20A dem Anschlussbereich des Durchflussteils, und der Teil des Produkts des Vorförmlings 20B dem mittig angeordneten Bereich des Durchflussteils.

Der Vorförmling 20A weist an seinem dem zu verschweißenden Vorförmling 20B zugewandten Ende zumindest einen Flansch auf, wobei der Flansch einen (bevorzugt außenliegenden) Sichtschutz-Flansch 54, einen (bevorzugt zwischenliegenden) Verschweißungs-Flansch 58 und einen (bevorzugt innenliegenden) Anschlag-Flansch 60 aufweist. Der Flansch des Vorförmlings 20A ist konfiguriert, mit einem entsprechenden Flansch des Vorförmlings 20B zusammenzuwirken. Der Vorförmling 20B weist an seinen beiden Enden jeweils einen (bevorzugt gleich ausgebildeten) Flansch auf, wobei der Flansch einen abgestuften Bereich 62, einen (bevorzugt zwischenliegenden) Verschweißungs-Flansch 58 und einen (bevorzugt innenliegenden) Anschlag-Flansch 60 aufweist. Der abgestufte Bereich 62 weist einen geringeren Außendurchmesser auf als der Innendurchmesser des außenliegenden Sichtschutz-Flansches 54, und wird daher beim Verschweißen der zwei Vorförmlinge durch den Sichtschutz-Flansch 54 verdeckt. Die Verschweißungs-Flansche 58, 58 stellen das zu verschweißende Material bereit, und die innenliegenden Anschlag-Flansche 60, 60 dienen als Anschlag und/oder Abdichtungsflansch der Kanalabschnitte der Vorförmlinge 20A und 20B. Somit ist insbesondere gewährleistet, das etwaiges Verschweißungsmaterial von den jeweiligen Verschweißungsflanschen 58 nicht in den Kanal 56 in einem Übergangsbereich zwischen den Vorförmlingen 20, 20' eintreten kann, so dass bevorzugt eine glatte Kanalinnenfläche bereitgestellt werden kann.

Im Folgenden wird ein Verfahren zum Verschweißen der Vorförmlinge anhand der Figuren 4 und 6 beispielhaft beschrieben.

Die zuvor beschriebenen drei Vorförmlinge 20A, 20B und 20C, d.h. einem verformbaren Bereich 2 als Mittelteil und zwei Anschlussbereichen 7, 8 in Form von Schlauchtüllen mit definierten Innenkanälen, können mittels der gleichen Vorrichtung 42 zusammengefügt werden, welche in Fig. 4 gezeigt ist. Das Kanalausbildungselement 30 wird aus der Vorrichtung 42 entfernt und beide Schlitten werden mit Spannzangen zur Aufnahme der zu verbindenden Einzelbauteile ausgestattet. Dazwischen wird ein vertikal verfahrbarer Heizspiegel angeordnet. Der Heizspiegel wird über 60 min aufgewärmt und erreicht am Temperaturregler eine Temperatur von 325°.

Die stirnseitig mechanisch bearbeiteten Vorförmlinge werden in einer vorher festgelegten Reihenfolge in die entsprechenden Spannzangen eingesetzt und fixiert. Dabei wird über Stifte an den Spannzangen (Führungsdornen), die jeweils in eine Nut im Bauteil passen, sichergestellt, dass die die Innenkanäle der Bauteile exakt zueinander ausgerichtet werden. Ein Verdrehen der Spannzangen mit samt den Bauteilen ist somit unmöglich. Nach dem Starten fährt der Heizspiegel herab und die beiden Schlitten fahren mit den stirnseitigen Schweißdämmen, d.h. den Verschweißungsflanschen 58, am Bauteil beidseitig gegen den Heizspiegel. Dort werden die Schweißdämme 30s lang angeschmolzen. Nach der Anschmelzzeit fahren die beiden Schlitten auseinander und der Heizspiegel wird aus dem Verfahrweg gehoben. Anschließend fahren die Schlitten soweit zusammen, dass die Vorförmlinge an ihren Auflageflächen aneinander liegen. Die dabei zusammengeschobenen und verschmelzenden Schweißdämme kühlen über einen Zeitraum von 15s ab. Nach dieser Abkühlzeit öffnet eine Spannzange und die Schlitten fahren auseinander. Nach Erreichen der Endposition wird die Baugruppe aus verformbarem Mittelteil 2 (Vorförmling 20B) und Schlauchtüllenanschlussbereich 7 (Vorförmling 20A oder 20C) freigegeben.

Diese Baugruppe ist nun umgedreht in die andere Spannzange einzusetzen, so dass die freie Stirnfläche des Mittelteils 2 aus der Spannzange für den nächsten Fügeprozess herausragt. Nach erfolgter Aufwärmzeit beginnt dieser Fügeprozess wie beschrieben von neuem. Nach dem zweiten Fügeschritt mit dem verbleibenden Vorförmling erhält man eine Baugruppe aus einem Mittelteil- und zwei Schlauchtüllen- vorförmlingen, welche abschließend in einer mechanischen Bearbeitung ihre endgültige Form bekommen.

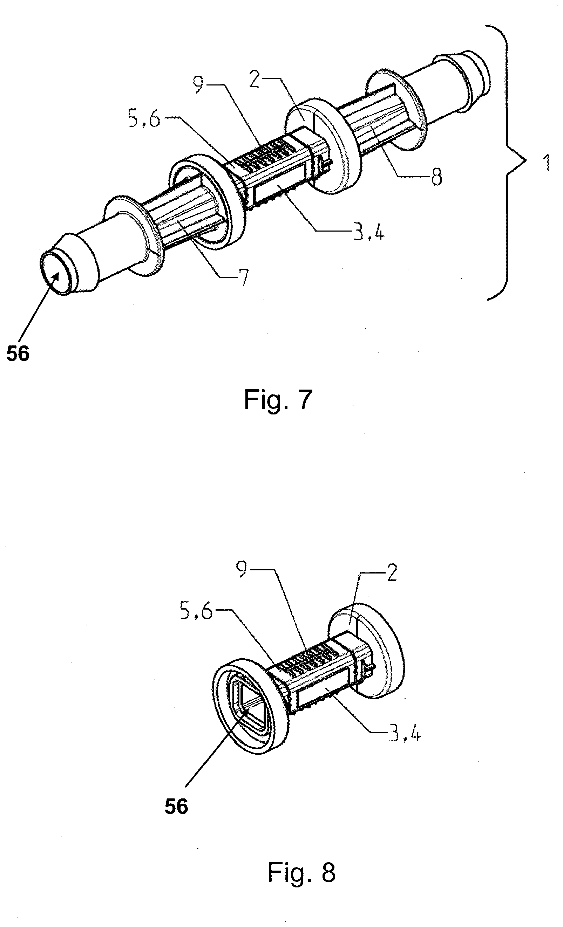

Fig. 7 ist eine perspektivische Gesamtdarstellung des Durchflusskunststoffteils 1, einem Beispiel des Produkts, von außen. Der mittig angeordnete, verformbare Bereich 2 wird von den Anschlussbereichen 7 und 8 flankiert, an deren äußeren Enden Schläuche aufgeschoben werden können. Im Bereich der Anschlussbereiche 7, 8 ist der runde Innenquerschnitt der Anschlussbereiche 7, 8 zu erkennen. Am mittig angeordneten Bereich 2 ist eine der Druckbereichsflächen 5, 6 mit einem entsprechenden Profil 9 zu sehen. Die Druckbereichsflächen 5, 6 liegen sich gegenüber. Im rechten Winkel dazu befindet sich eine der beiden ebenen Sensorkontaktflächen 3, 4, die sich ebenfalls gegenüber liegen.

Fig. 8 ist eine perspektivische Darstellung des mittig angeordneten Bereichs 2 mit einer der Druckbereichsflächen 5, 6 und dem Profil 9 sowie den Sensorkontaktflächen 3, 4. Am Kopfende des mittig angeordneten Bereichs 2 ist in dieser Darstellung der nahezu quadratische Innenquerschnitt des Kanals 56 zu erkennen.

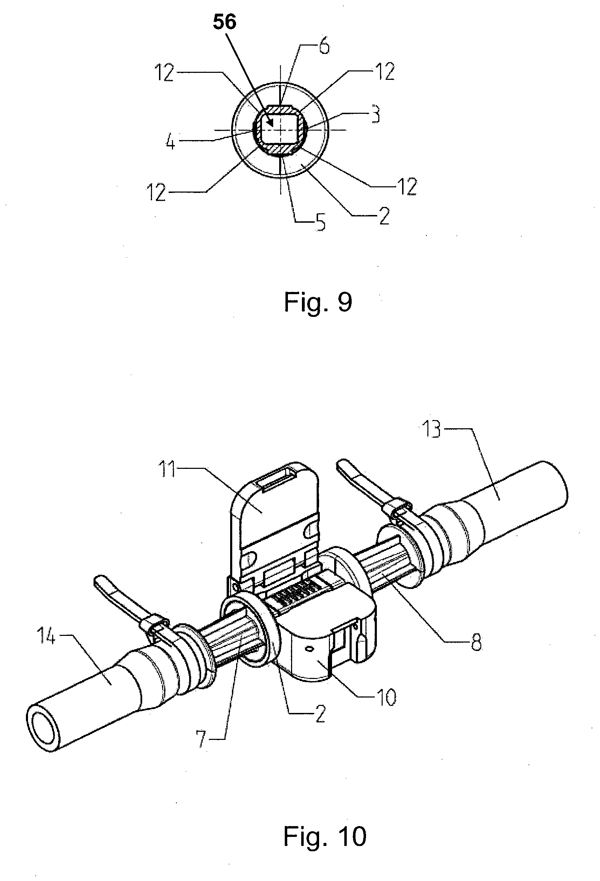

Fig. 9 zeigt einen Querschnitt durch den mittig angeordneten Bereich 2 mit den Dünnstellen 12 zwischen den Druckbereichsflächen 5, 6 und den Sensorkontaktflächen 3, 4. Die durch die rechtwinklige Anordnung der Druckbereichsflächen zu den Sensorkontaktflächen entstehende Messkammer ist dadurch im Wesentlichen rechteckig ausgeformt.

Fig. 10 ist eine perspektivische Darstellung des Durchflusskunststoffteils 1 samt angeschlossenen Schläuchen und Messaufnehmer 10. Die Schläuche 13, 14 sind an den Anschlussbereichen 7, 8 aufgeschoben und jeweils mit einem Schlauchbinder fixiert. Weiterhin ist der mittig angeordnete Bereich 2 des Durchflusskunststoffteils 1 mit den seitlich angeordneten Sensorkontaktflächen 3, 4 in einen Messaufnehmer 10 eingelegt. Entsprechend liegen die Druckbereichsflächen 5, 6 oben (sichtbar) und unten (nicht sichtbar) im Messaufnehmer 10. Der Deckel 11 kann so über einer der Druckbereichsflächen 5, 6 geschlossen werden.

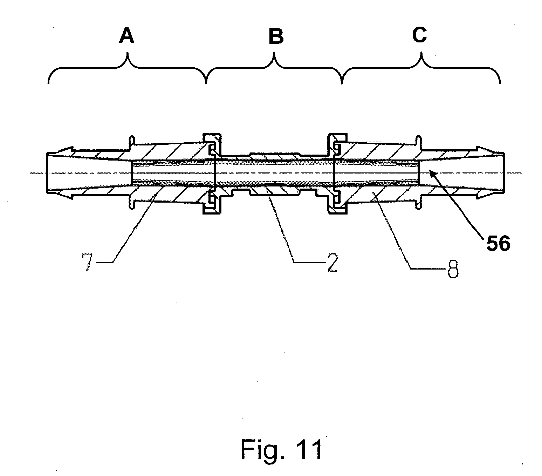

Fig. 11 zeigt einen Längsschnitt durch das gesamte Durchflusskunststoffteil 1 in dreigeteilter Bauweise mit dem mittig angeordneten Bereich 2 und den Anschlussbereichen 7, 8. Durch den Schnitt ist die Einlaufstrecke des fluiden Mediums zu erkennen. Das Strömungsprofil im Kanal 56 wird so sukzessive von einem runden in ein eckiges Strömungsprofil überführt, wodurch Turbulenzen vermieden werden können. Die hohe Oberflächengüte und der nahtlose Übergang der Kanalabschnitte sorgt zusätzlich für ein Strömungsverhalten ohne Turbulenzen. Mit A, B und C sind die Abschnitte des Produkts angedeutet, die jeweils aus einem einzelnen Vorförmling hergestellt wurden.

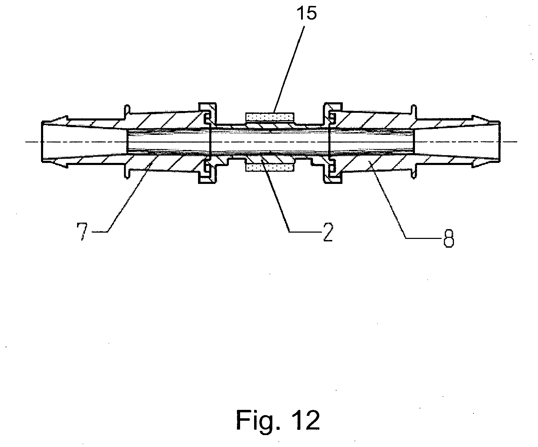

Fig. 12 zeigt einen Längsschnitt durch ein weiteres Beispiel des Durchflusskunststoffteils 1 in dreigeteilter Bauweise mit dem mittig angeordneten Bereich 2 und den Anschlussbereichen 7, 8. Bei dieser Ausführungsform weist der mittig angeordnete Bereich 2 zusätzlich ein elastisches oder teilelastisches Kontaktierungshilfsmittel 15 auf. Vorzugsweise ummantelt das elastische oder teilelastische Kontaktierungshilfsmittel 15 den mittig angeordneten Bereich 2 zumindest im Bereich der Sensorkontaktflächen 3, 4 und den Druckbereichsflächen 5, 6. Das Kontaktierungshilfsmittel kann jedoch auch nur auf den Sensorkontaktflächen 3, 4 und/oder den Druckbereichsflächen 5, 6 angeordnet sein. Das elastische oder teilelastische Kontaktierungshilfsmittel 15 besteht zumindest teilweise aus einem Material, welches nachgiebiger bzw. weicher ist als das Material des mittig angeordneten Bereichs 2. Ferner ist das Material des elastischen oder teilelastischen Kontaktierungshilfsmittels 15 dazu geeignet, Schallwellen des Messaufnehmers zu übertragen bzw. diese über die Druckbereichsflächen 5, 6 in das fluide Medium einzukoppeln. Vorzugsweise wird Silikon als Material für das Kontaktierungshilfsmittel 15 verwendet. Das elastische oder teilelastische Kontaktierungshilfsmittel 15 kann mittels Umspritzen, Kleben oder Schweißen mit dem mittig angeordneten Bereich 2 (bevorzugt fest) verbunden bzw. angeformt werden. Aufgabe des elastischen oder teilelastischen Kontaktierungshilfsmittels 15 ist es insbesondere, Herstellungstoleranzen des Messaufnehmers auszugleichen und/oder sicherzustellen, dass die Schallwellen sicher und gleichmäßig über die Druckbereichsflächen 5, 6 in das fluide Medium eingekoppelt werden können, und sicher über die Sensorkontaktflächen 3, 4 erfasst werden können. Somit wird bevorzugt ein elastisches oder teilelastisches Kontaktierungshilfsmittel, z.B. in Form einer Silikonschicht oder eines Silikonmantels, um den mittig angeordneten Bereich (bevorzugt fest mit dem Durchflusskunststoffteil, insbesondere an der/den Sensorkontaktfläche(n) verbunden bzw. angeformt) vorgesehen. Dabei kann das Kontaktierungshilfsmittel um den mittig angeordneten Bereich ganz oder abschnittsweise, z.B. nur im Bereich der Sensorkontaktflächen, angeordnet sein. Darüber hinaus kann auf zusätzliche Mittel (z.B. ein Kontaktgel) zur Kontaktherstellung zwischen Sensorkontaktflächen und den eigentlichen Sensoren weitestgehend verzichtet werden.

Vorzugsweise sind die Vorförmlinge und das daraus hergestellte Produkt aus einem Kunststoff ausgebildet. Zum Ausbilden des Kanals in den Vorförmlingen bzw. in dem Produkt weist das Kanalausbildungselement während des Ausbildens des Kanals eine Temperatur auf, die höher ist als die Schmelztemperatur des Kunststoffes und niedriger ist als die Zersetzungstemperatur des Kunststoffes.

### Bezugszeichenliste

- 1: Durchflusskunststoffteil
- 2: verformbarer Bereich
- 3, 4: Sensorkontaktflächen
- 5, 6: Druckbereichsflächen
- 7, 8: Anschlussbereiche
- 9: Profil
- 10: Messaufnehmer
- 11: Deckel
- 12: Dünnstellen
- 13, 14: Schläuche
- 15: Kontaktierungshilfsmittel
- 20, 20A, 20B: Vorförmling
- 22: Ausnehmung
- 24: Endfläche
- 26: Fase
- 28: Reservoir
- 30, 30': Kanalausbildungselement
- 32, 32': Einführbereich
- 34: Einspannbereich
- 36, 36': Ausnehmung
- 38: Querschnittsveränderungsbereich
- 40: Querschnittskonstantbereich
- 42: Pressvorrichtung
- 44: Werkstückaufnahme
- 46: Einspannvorrichtung
- 48: Schiene
- 50: Kuppel
- 52: verdrängtes Material
- 54: Sichtschutz-Flansch
- 56: Kanal
- 58: Verschweißungs-Flansch
- 60: Anschlag-Flansch
- 62: abgestufter Bereich

## Patentansprüche

1. Verfahren zum Ausbilden eines Kanals (56), umfassend:
Bereitstellen eines Vorförmlings (20) mit einer darin ausgebildeten Ausnehmung (22);
Erhitzen eines Kanalausbildungselements (30; 30') auf eine Temperatur über einer Schmelztemperatur eines Materials des Vorförmlings (20, 20A, 20B), wobei eine Außenkontur des Kanalausbildungselements (30; 30') zumindest bereichsweise einer Innenkontur des auszubildenden Kanals (56) entspricht; und
relatives Bewegen des erhitzten Kanalausbildungselements (30; 30') und/oder des Vorförmlings (20) zueinander, so dass sich das erhitzte Kanalausbildungselement (30; 30') zumindest bereichsweise in die Ausnehmung (22) in einer Hineinbewegungsrichtung hineinbewegt, wobei das Material des Vorförmlings (20) in einem Bereich um die Ausnehmung (22) zumindest teilweise aufgeschmolzen wird und zumindest teilweise durch das Kanalausbildungselement (30; 30') verdrängt wird, wobei so zumindest ein Teil des auszubildenden Kanals (56) ausgebildet wird, und
wobei zum Ausbilden zumindest eines Teils des auszubildenden Kanals (56) durch das Kanalausbildungselement (30; 30') das Material des Vorförmlings (20) ausschließlich in einem angrenzenden Bereich der Ausnehmung (22) aufgeschmolzen wird, während restliche Bereiche des Vorförmlings (20) in einem festen Zustand bleiben.

2. Verfahren nach Anspruch 1, wobei das Kanalausbildungselement (30; 30') nach Abkühlen und zumindest teilweises Verfestigen des aufgeschmolzenen Materials des Vorförmlings (20) aus dem Vorförmling (20) hinausbewegt wird.

3. Verfahren nach Anspruch 1 oder 2, wobei das Kanalausbildungselement (30; 30') entlang einer Ausbildungsrichtung des Kanals (56) zumindest bereichsweise einen sich verändernden Querschnitt aufweist.

4. Verfahren nach einem der vorangehenden Ansprüche, wobei
die Ausnehmung (22) zumindest teilweise eine im Wesentlichen zylindrische Ausnehmung (22) ist, welche eine axiale Länge größer als ihr Durchmesser aufweist;
das Kanalausbildungselement (30; 30') die Form eines Dorns aufweist; und
die Hineinbewegungsrichtung des Kanalausbildungselements (30; 30') in die Ausnehmung (22) der axialen Richtung der Ausnehmung (22) entspricht.

5. Verfahren nach einem der vorangehenden Ansprüche, umfassend:
Bereitstellen einer Mehrzahl von Vorförmlingen (20);
Ausbilden eines Teils des Kanals in jedem der Vorförmlinge (20) mittels des Kanalausbildungselements (30; 30'); und
Verbinden der Vorförmlinge (20A, 20B) miteinander derart, dass ein durchgehender Kanal (56) ausgebildet wird.

6. Verfahren nach Anspruch 5, wobei die Vorförmlinge (20A, 20B) durch Verschweißen verbunden werden, umfassend, Ausbilden zumindest eines Verschweißungs-Flansches (58) an den zu verschweißenden Flächen der Vorförmlinge (20).

7. Verfahren nach Anspruch 6, wobei die Vorförmlinge (20A, 20B) umfassen:
einen Anschlag-Flansch (60), welcher als Anschlag und/oder Abdichtungsflansch der Teile der Kanäle der Vorförmlinge (20A, 20B) dient; wobei der Anschlag-Flansch (60) bevorzugt radial innerhalb des Verschweißungs-Flansches (58) angeordnet ist; und/oder
einen Sichtschutz-Flansch (54), welcher als Sichtschutz dient und bevorzugt radial außerhalb des Verschweißungs-Flansches (58) angeordnet ist.

8. Verfahren nach Anspruch 5, 6 oder 7, wobei das Verbinden der Vorförmlinge (20A, 20B) umfasst:
Ausrichten und Führen der zu verbindenden Vorförmlinge (20A, 20B) durch Einführen eines Führungsdorns mit einer Außenkontur, welcher zumindest bereichsweise der Innenkontur der Teile des Kanals der zu verschweißenden Vorförmlinge (20A, 20B) entspricht, wobei der Führungsdorn durch den Teil des Kanals des einen Vorförmlings (20A) hindurch zumindest teilweise in den Teil des Kanals des anderen Vorförmlings (20B) eingeführt wird.

9. Verfahren nach einem der vorangehenden Ansprüche, umfassend:
Bereitstellen von drei Vorförmlingen (20);
Ausbilden eines ersten Teils des auszubildenden Kanals (56) in einem ersten der Vorförmlinge (20) mittels eines ersten Kanalausbildungselements (30') in Form eines Dorns, wobei ein Einführungsabschnitt (32') des ersten Kanalausbildungselements (30') zumindest bereichsweise einen sich zur Spitze des ersten Kanalausbildungselements (30') hin kontinuierlich verändernden Querschnitt aufweist, wobei sich der Querschnitt zur Spitze hin von einem im Wesentlichen runden zu einem im Wesentlichen rechteckigen Querschnitt verändert;
Ausbilden eines zweiten Teils des auszubildenden Kanals (56) in einem zweiten der Vorförmlinge (20) mittels eines zweiten Kanalausbildungselements (30) in Form eines Dorns, wobei ein Einführungsabschnitt (32) des zweiten Kanalausbildungselements (30) einen im Wesentlichen rechteckigen Querschnitt aufweist, welcher dem rechteckigen Querschnitt im Bereich der Spitze des ersten Kanalausbildungselements (30') entspricht;
Ausbilden eines dritten Teils des auszubildenden Kanals (56) in einem dritten der Vorförmlinge (20) mittels des ersten Kanalausbildungselements (30'); und
nach dem Ausbilden der Teile der Kanals (56), Verbinden des ersten und dritten Vorförmlings (20A) mit dem zweiten Vorförmling (20B) derart, dass ein durchgehender Kanal (56) ausgebildet wird, wobei sich der Querschnitt des Kanals (56) von einem im Wesentlichen runden Querschnitt zunächst kontinuierlich zu einem im Wesentlichen rechteckigen Querschnitt ändert, und zum Ende des Kanals (56) hin sich von dem im Wesentlichen rechteckigen Querschnitt zu dem im Wesentlichen runden Querschnitt kontinuierlich verändert.

## Claims

1. A method of forming a duct (56), comprising:
providing a preform (20) having a recess (22) formed therein;
heating a duct formation element (30, 30') to a temperature above a melting temperature of a material of the preform (20, 20A, 20B), wherein an outer contour of the duct formation element (30, 30') corresponds to an inner contour of the duct (56) to be formed at least in part(s); and
moving the heated duct formation element (30; 30') and/or the preform (20) relative to each other, so that the heated duct formation element (30; 30') moves into the recess (22) in a direction of inward movement at least in part(s), wherein the material of the preform (20) is at least partially melted in a region around the recess (22) and is at least partially displaced by the duct formation element (30; 30'), wherein at least part of the duct (56) to be formed is formed in this way, and
wherein, to form at least part of the duct (56) to be formed by the duct formation element (30; 30'), the material of the preform (20) is melted exclusively in an adjacent region of the recess (22), whereas remaining regions of the preform (20) remain in a solid state.

2. The method according to claim 1, wherein the duct formation element (30; 30') is moved out of the preform (20) after cooling and at least partially solidifying the molten material of the preform (20).

3. The method according to claim 1 or 2, wherein the duct formation element (30, 30') has a varying cross section at least in part(s) along a formation direction of the duct (56).

4. The method according to one of the preceding claims, wherein
the recess (22) is at least partially a substantially cylindrical recess (22) having an axial length greater than its diameter;
the duct formation element (30; 30') is in the form of a mandrel; and
the direction of inward movement of the duct formation element (30, 30 ') into the recess (22) corresponds to the axial direction of the recess (22).

5. The method according to one of the preceding claims, comprising:
providing a plurality of preforms (20);
forming part of the duct in each of the preforms (20) by means of the duct formation member (30; 30'); and
connecting the preforms (20A, 20B) to each other such that a continuous duct (56) is formed.

6. The method according to claim 5, wherein the preforms (20A, 20B) are joined by welding, comprising forming at least one welding flange (58) on the surfaces to be welded of the preforms (20).

7. The method according to claim 6, wherein the preforms (20A, 20B) comprise:
an abutment flange (60) that serves as an abutment and/or sealing flange of the parts of the ducts of the preforms (20A, 20B); wherein the abutment flange (60) is preferably arranged radially within the welding flange (58); and/or
a privacy screen flange (54), which serves as a privacy screen and is preferably arranged radially outside of the welding flange (58).

8. The method according to claim 5, 6 or 7, wherein joining the preforms (20A, 20B) comprises:
aligning and guiding the preforms (20A, 20B) to be joined by inserting a guiding mandrel having an outer contour, which corresponds to the inner contour of the parts of the duct of the preforms (20A, 20B) to be welded at least in part(s), wherein the guiding mandrel is inserted through the part the duct of said one preform (20A) at least partially into the part of the duct of the other preform (20B).

9. The method according to one of the preceding claims, comprising:
providing three preforms (20);
forming a first part of the duct (56) to be formed in a first one of the preforms (20) by means of a first duct formation element (30') in the form of a mandrel, wherein an insertion portion (32') of the first duct formation element (30'), at least in part(s), has a cross section continuously changing toward the tip of the first duct formation element (30'), wherein the cross section changes toward the tip from a substantially circular to a substantially rectangular cross section;
forming a second part of the duct (56) to be formed in a second one of the preforms (20) by means of a second duct formation element (30) in the form of a mandrel, wherein an insertion portion (32) of the second duct formation element (30) has a substantially rectangular cross section, which corresponds to the rectangular cross section in the region of the tip of the first duct formation element (30');
forming a third part of the duct (56) to be formed in a third one of the preforms (20) by means of the first duct formation element (30'); and
after forming the parts of the duct (56), connecting the first and third preforms (20A) to the second preform (20B) such that a continuous duct (56) is formed, wherein at first the cross section of the duct (56) changes continuously from a substantially circular cross section to a substantially rectangular cross section, and toward the end of the duct (56) continuously changes from the substantially rectangular cross section to the substantially circular cross section.

## Revendications

1. Procédé de réalisation d'un canal (56) comprenant :
mise à disposition d'une préforme (20) avec un évidement réalisé en son sein (22) ;
chauffage d'un élément de réalisation de canal (30 ; 30') à une température au-dessus d'une température de fusion d'un matériau de la préforme (20, 20A, 20B), dans lequel un contour externe de l'élément de réalisation de canal (30 ; 30') correspond au moins par région à un contour interne du canal à réaliser (56) ; et
déplacement relatif de l'élément de réalisation de canal chauffé (30 ; 30') et/ou de la préforme (20) l'un par rapport à l'autre de sorte que l'élément de réalisation de canal chauffé (30 ; 30') se déplace vers l'intérieur au moins par région dans l'évidement (22) dans une direction de déplacement vers l'intérieur, dans lequel le matériau de la préforme (20) est au moins partiellement fondu dans une région autour de l'évidement (22) et est au moins partiellement refoulé à travers l'élément de réalisation de canal (30 ; 30'), dans lequel au moins une partie du canal à réaliser (56) est réalisée de cette manière, et
dans lequel le matériau de la préforme (20) est exclusivement fondu dans une région adjacente de l'évidement (22) pour la réalisation d'au moins une partie du canal à réaliser (56) à travers l'élément de réalisation de canal (30 ; 30') tandis que des régions restantes de la préforme (20) restent dans un état solide.

2. Procédé selon la revendication 1, dans lequel l'élément de réalisation de canal (30 ; 30') est déplacé vers l'extérieur de la préforme (20) après refroidissement et solidification au moins partielle du matériau fondu de la préforme (20).

3. Procédé selon la revendication 1 ou 2, dans lequel l'élément de réalisation de canal (30 ; 30') présente au moins par région une section transversale variable le long d'une direction de réalisation du canal (56).

4. Procédé selon une des revendications précédentes, dans lequel
l'évidement (22) est au moins partiellement un évidement essentiellement cylindrique (22) qui présente une longueur axiale supérieure à son diamètre ; l'élément de réalisation de canal (30 ; 30') présente la forme d'une broche ; et
la direction de déplacement vers l'intérieur de l'élément de réalisation de canal (30 ; 30') dans l'évidement (22) correspond à la direction axiale de l'évidement (22).

5. Procédé selon une des revendications précédentes, comprenant :
mise à disposition d'une pluralité de préformes (20) ;
réalisation d'une partie du canal dans chacune des préformes (20) au moyen de l'élément de réalisation de canal (30 ; 30') ; et
connexion des préformes (20A, 20B) les unes aux autres de telle sorte qu'un canal continu (56) est réalisé.

6. Procédé selon la revendication 5, dans lequel les préformes (20A, 20B) sont connectées par soudure, comprenant réaliser au moins une bride de soudure (58) sur les faces à souder des préformes (20).

7. Procédé selon la revendication 6, dans lequel les préformes (20A, 20B) comprennent :
une bride de butée (60) qui sert de butée et/ou de bride d'étanchéité des parties des canaux des préformes (20A, 20B) ; dans lequel la bride de butée (60) est de préférence disposée radialement au sein de la bride de soudure (58) ; et/ou
une bride de protection visuelle (54) qui sert de protection visuelle et est de préférence disposée radialement à l'extérieur de la bride de soudure (58).

8. Procédé selon la revendication 5, 6 ou 7, dans lequel la connexion des préformes (20A, 20B) comprend :
alignement et guidage des préformes (20A, 20B) à connecter par introduction d'une broche de guidage avec un contour externe qui correspond au moins par région au contour interne des parties du canal des préformes (20A, 20B) à souder, dans lequel la broche de guidage est introduite à travers la partie du canal d'une des préformes (20A) au moins partiellement dans la partie du canal de l'autre préforme (20B).

9. Procédé selon une des revendications précédentes, comprenant :
mise à disposition de trois préformes (20) ;
réalisation d'une première partie du canal à réaliser (56) dans une première des préformes (20) au moyen d'un premier élément de réalisation de canal (30') sous forme d'une broche, dans lequel une section d'introduction (32') du premier élément de réalisation de canal (30') présente au moins par région une section transversale variable en continu vers la pointe du premier élément de réalisation de canal (30'), dans lequel la section transversale vers la pointe varie d'une section transversale essentiellement ronde à une section transversale essentiellement rectangulaire ;
réalisation d'une deuxième partie du canal à réaliser (56) dans une deuxième des préformes (20) au moyen d'un second élément de réalisation de canal (30) sous forme d'une broche, dans lequel une section d'introduction (32) du second élément de réalisation de canal (30) présente une section transversale essentiellement rectangulaire qui correspond à la section transversale rectangulaire dans la région de la pointe du premier élément de réalisation de canal (30') ;
réalisation d'une troisième partie du canal à réaliser (56) dans une troisième des préformes (20) au moyen du premier élément de réalisation de canal (30') ; et après la réalisation des parties du canal (56), connexion des première et troisième préformes (20A) à la deuxième préforme (20B) de telle sorte qu'un canal continu (56) est réalisé, dans lequel la section transversale du canal (56) change d'une section transversale essentiellement ronde d'abord en continu à une section transversale essentiellement rectangulaire, et varie en continu vers l'extrémité du canal (56) de la section transversale essentiellement rectangulaire à la section transversale essentiellement ronde.
